# EUROPÄISCHE PATENTSCHRIFT

(11) **EP 3 784 518 B1**
(45) Veröffentlichungstag und Bekanntmachung des Hinweises auf die Patenterteilung: **11.02.2026**
(21) Anmeldenummer: 19720119.7
(22) Anmeldetag: 25.04.2019
(51) Int. Cl.: B60L 53/14, H02J 7/00, H04L 9/32, B60L 53/65, B60L 53/68, B60L 53/66, H01M 10/42, H02J 13/00, H04L 9/00, H04W 12/47, H04W 12/08, B60L 53/57

(54) **DIGITALES ZUGANGSSYSTEM FÜR FAHRZEUGE FÜR VON AUSSEN GESTEUERTE LADEVORGÄNGE**
DIGITAL ACCESS SYSTEM FOR VEHICLES FOR CHARGING CONTROLLED FROM THE OUTSIDE
SYSTÈME D'ACCÈS DIGITALE POUR DES VÉHICULES, LE CHARGEMENT CONTRÔLÉ PAR L'EXTÉRIEUR

(30) Priorität: 25.04.2018 DE 102018109956; 25.04.2018 DE 102018109962; 18.06.2018 DE 102018114593
(43) Veröffentlichungstag der Anmeldung: 03.03.2021
(73) Patentinhaber: EGS Entwicklungs- und Forschungs- GmbH, 70469 Stuttgart (DE)
(72) Erfinder: SCHUMACHER, Uli Erich, 70469 Stuttgart (DE)
(74) Vertreter: Holzwarth-Rochford, Andreas
(86) Internationale Anmeldenummer: PCT/EP2019/060671
(87) Internationale Veröffentlichungsnummer: WO 2019/207070

(56) Entgegenhaltungen:
- EP-A2- 2 712 757
- WO-A1-2016/159861
- WO-A1-2017/209735
- WO-A2-2011/109460
- FR-A1- 3 043 964
- US-A1- 2015 298 565
- US-B1- 8 265 816

## Beschreibung

### Gebiet der Erfindung

Die Erfindung betrifft ein digitales Zugangssystem, ein Fahrzeug mit einem solchen Zugangssystem und ein Verfahren zur Gewährung einer Zugangsberechtigung zu einem Fahrzeug mit einem solchen Zugangssystem.

### Hintergrund der Erfindung

Zur Abdeckung des Energiebedarfs von Elektrofahrzeugen werden Stromtankstellen genutzt, die die dafür benötigte elektrische Energie bereitstellen. Mit steigender Anzahl von Elektrofahrzeugen und dem Wunsch verbesserter Mobilität ergibt sich die Problematik, dass unterschiedliche Nutzer mit unterschiedlichen Ladeanforderungen solche Stromtankstellen besuchen.

Dokument DE 10 2011 101 535 A1 offenbart ein System und Verfahren, mit dem die Strombetankung über eine flexible Zuordnung von Zertifikaten für die Stromkostenabrechnung vereinfacht wird. Hierbei ist eine Authentifizierungseinrichtung im Elektrofahrzeug angeordnet, die das Elektrofahrzeug bei einer Ladesteuervorrichtung der Ladestation authentifiziert, woraufhin diese die Ladestation für das authentifizierte Fahrzeug freischaltet. Hierbei überträgt ein Server die dafür benötigten Authentifizierungsdaten an die Authentifizierungseinrichtung, wobei der Server über einen Energieversorger ebenfalls mit der Ladestation zur Überprüfung des Betankungszertifikats verbunden ist. Zur Durchführung dieses Verfahrens und des entsprechenden Systems muss der Nutzer allerdings vor Ort sein, um der Ladestation nach erfolgter Authentifizierung dann den für die Betankung benötigten physischen Zugriff auf das Elektrofahrzeug zu gewähren.

Die Mehrzahl der derzeitig erhältlichen Elektrofahrzeuge fährt ihr Steuersystem im Ruhezustand herab. Dadurch sind in der Regel nach 10 - 20 Minuten alle technischen Steuerungsmoduleinheiten im Elektrofahrzeug ausgeschaltet, wodurch der Fahrzeugakkumulator von außen weder beladen noch entladen werden kann. Bei den meisten Modellen ist zusätzlich die Zugangsklappe zur Steckverbindung zur Verbindung des Fahrzeug-Akkumulators mit einer Ladestation, insbesondere Stromladestation, über das Schließsystem des Elektrofahrzeugs gesperrt.

Somit wird eine Mobilaufladung eines Elektrofahrzeugs oder eine mobile Beladung des Elektrofahrzeugs mit anderen Gütern ohne Anwesenheit des Nutzers des Elektrofahrzeugs verhindert, da die Servicemitarbeiter ohne Zugangsberechtigung zum Elektrofahrzeug des Kunden nicht sicherstellen können, dass das System im Rahmen einer Aufladung oder Beladung die dafür notwendigen Komponenten des Elektrofahrzeugs freigibt. Die Freigabe könnte beispielsweise über Abgabe des Fahrzeugschlüssels erreicht werden, was allerdings voraussetzt, dass der Fahrzeugbesitzer in diese Abgabe einwilligt und andererseits, dass zum Zeitpunkt der Abgabe die Servicemitarbeiter für eine solche Übergabe der Fahrzeugschlüssel vor Ort sein muss. Außerdem müsste nach erfolgter Aufladung oder Beladung des Elektrofahrzeugs der Fahrzeugschlüssel dem Nutzer wieder ausgehändigt werden, wozu dieser entweder den Schlüssel beim Serviceunternehmen, das die Betankung durchgeführt hat, abholt oder ihm vom Serviceunternehmen gebracht werden müsste.

Diese Maßnahmen sind sowohl für den Nutzer als auch für das Serviceunternehmen umständlich und zeitraubend.

Gleichzeitig wäre es wünschenswert, wenn die Standzeit eines Fahrzeugs, insbesondere die eines Elektrofahrzeugs bei den benötigten längeren Ladepausen, für zusätzliche Servicedienstleistungen benutzt werden könnte, zu deren Ausführung ebenfalls ein Zugang zum jeweiligen Fahrzeug notwendig wäre. Solche Servicedienstleistungen wären beispielsweise das Anliefern und Deponieren von Waren im jeweiligen Fahrzeug.

EP 2 712 757 A2 offenbart ein digitales Zugangssystem geeignet zum Einbau in einem Fahrzeug mit einem Verriegelungssystem und zur geeigneten Verbindung mit einer Systemsteuerung des Fahrzeugs, wobei das Zugangssystem eine Freischalteinheit zur Positionierung in dem Fahrzeug, eine Zugriffseinheit und eine Aktivierungseinheitzur Verwendung außerhalb des Fahrzeugs umfasst, wobei die Aktivierungseinheit dazu ausgestaltet ist, mittels drahtloser Datenkommunikation zu der Freischalteinheit die Freischalteinheit für einen Zeitraum zu aktivieren.

Es wäre daher wünschenswert, ein Verfahren oder System zur Verfügung zu haben, um eine Aufladung oder Beladung eines Fahrzeugs mit größerer Flexibilität ohne eine persönliche Anwesenheit des Nutzers zügig und sicher für den Nutzer durchführen zu können.

### Zusammenfassung der Erfindung

Es ist daher eine Aufgabe der Erfindung, ein Verfahren oder System zur Verfügung zu haben, mit dem eine Aufladung oder Beladung eines Fahrzeugs mit größerer Flexibilität ohne eine persönliche Anwesenheit des Nutzers zügig und sicher für den Nutzer durchgeführt werden kann. Die Erfindung ist definiert in den Ansprüchen.

Diese Aufgabe wird gelöst durch ein digitales Zugangssystem gemäß Anspruch 1. Das digitale Zugangssystem ist zumindest geeignet zum Einbau in einem Fahrzeug mit einem Verriegelungssystem und zur geeigneten Verbindung mit einer Systemsteuerung des Fahrzeugs, wobei das Zugangssystem mindestens eine Freischalteinheit zur Positionierung in dem Fahrzeug, mindesten eine Zugriffseinheit und mindestens eine Aktivierungseinheit zur Verwendung außerhalb des Fahrzeugs umfasst, wobei die Aktivierungseinheit dazu ausgestaltet ist, mittels drahtloser Datenkommunikation zu der Freischalteinheit die Freischalteinheit zumindest für einen Zeitraum zu aktivieren, die Zugriffseinheit dazu ausgestaltet ist, mittels einer zur vorherigen Datenkommunikation separaten unabhängigen drahtlosen Datenkommunikation mit der durch die Aktivierungseinheit vorher aktivierten Empfangseinheit einen Zugang zum Fahrzeug von außen zu veranlassen, wobei die Freischalteinheit dazu ausgestaltet ist, in Reaktion auf die Datenkommunikation mit der Zugriffseinheit den Zugang veranlassende Steuersignale an die Systemsteuerung zur Ansteuerung des Verriegelungssystems und Freigabe zumindest einer verriegelnden Komponente zur Ermöglichung des Zugangs zum Fahrzeug zu dessen Ladung zu übermitteln.

Der Begriff "Fahrzeug" bezeichnet hierbei alle Arten von Fahrzeugen, die mittels eines Verriegelungssystems einen Zugang von außen für Unbefugte sperren können. Der Begriff "Fahrzeug" betrifft hier Fahrzeuge mit allen Motortypen wie beispielsweise Elektrofahrzeuge, Fahrzeuge mit Verbrennungsmotoren oder mit Brennstoffzellen (wasserstoffgetriebene Fahrzeuge) oder Hybridfahrzeugen mit mindestens zwei oder mehreren unterschiedlichen Motortypen als Antrieb, umfassend Land- beziehungsweise Straßenfahrzeuge sowie Luft- und Wasserfahrzeuge.

Der Begriff "Ladung" bezeichnet hierbei das Hinzufügen von Objekten ins Fahrzeug und umfasst dabei sowohl das Beladen des Fahrzeugs beispielsweise mit Paketen oder Waren sowie das Betanken des Fahrzeugs mit Betriebs-, Kraft- oder Brennstoff, was im Falle eines Elektrofahrzeugs auch das elektrische Aufladen des Akkumulators des Elektrofahrzeugs mit einschließt.

Als Systemsteuerung wird die Elektrik/Elektronik des Fahrzeugs inklusive aller Komponenten (beispielsweise Prozessoren Steuerchips, elektronische Schaltkreise etc.), die zum Betrieb und der Steuerung Elektrik/Elektronik des Fahrzeugs benötigten werden, bezeichnet. Die Systemsteuerung ist dabei mit dem Verriegelungssystem verbunden, das die Fahrzeugbestandteile umfasst, die elektrisch vom Verschließen, Verriegeln oder Sperren von Fahrzeugkomponenten angesteuert werden können, wie beispielsweise Schließsysteme für Schlösser, Türen, Kofferraumklappen, Tankklappen etc. als auch Schaltkreise aller Art, die für die Ausführung von Handlungen wie beispielweise dem Positionieren eines Pakets im Kofferraum des Fahrzeugs oder dem Betanken des Fahrzeugs über die üblicherweise verriegelte Tankklappe vorgesehen sind, damit die Systemsteuerung diese Komponenten steuern und schalten kann. Der Begriff "Betanken" umfasst hierbei sowohl das Betanken eines Fahrzeugs mit üblichen Treibstoffen wie Benzin oder Diesel als auch die Befüllung eines Fahrzeugstanks mit Wasserstoff und das Aufladen eines Fahrzeugakkumulators im Falle von Elektrofahrzeugen. Die an die Systemsteuerung übermittelten Steuersignale werden dabei beispielsweise entsprechend der herstellerspezifischen Matrix eingeprägt. Der Zeitraum der Aktivierung der Freischalteinheit kann dabei je nach Ausführungsform eine vorbestimmte Dauer nach dem Zeitpunkt der Aktivierung sein oder wird nach Aktivierung durch Ausführung einer Handlung, wie beispielsweise das Schließen einer Tür, einer Tankklappe oder das Ziehen eines Ladesteckers, beendet.

Die Freischalteinheit ist zur Positionierung im Fahrzeug ausgestaltet und vorgesehen. Sie kann dabei im Fahrzeug fest installiert sein oder aber als Nachrüstkomponente nachträglich in ein Fahrzeug integriert werden, wozu sie mit der Systemsteuerung nachträglich in geeigneter Weise verbunden wird. Um die Freischalteinheit mit der Systemsteuerung des Fahrzeugs zu verbinden, können im Kabelbaum des Fahrzeugs entsprechende Anschlüsse bereitgestellt werden, beispielsweise bereits werksseitig bei der Erstmontage des Fahrzeugs. Die Freischalteinheit kann dabei im Rahmen der Erstmontage oder zu einem späteren Zeitpunkt über diese Anschlüsse in den Kabelbaum (Buss-System) des Fahrzeugs integriert werden. Das Buss-System des Fahrzeugs kann über einen entsprechenden Impuls in Gang gesetzt werden, sodass das spezifische System zur Ladesteuerung von der Systemsteuerung aktiviert wird. Die zwischen Freischalteinheit und der Systemsteuerung ausgetauschten Datenprotokolle müssen an die jeweilige herstellerspezifische Struktur des jeweiligen Fahrzeugs angepasst sein. Alternativ kann auch ein Öffnungsmechanismus an der Ladeklappe oder einer anderen verschließenden Komponente des Fahrzeugs bei einer Nachrüstung des Fahrzeugs mit dem erfindungsgemäßen Zugangssystem als Ersatzteil ausgetauscht werden, falls ein Zugang zu der Systemsteuerung beziehungsweise des Kabelbaums im Fahrzeug nicht möglich sein sollte und das Zugriffssystem dennoch einen Zugang zum Fahrzeug ermöglichen soll. Die Freischalteinheit kann dabei an jeder geeigneten Position im Fahrzeug angebracht werden, die einerseits eine ungestörte drahtlose Datenkommunikation mit den externen Komponenten Aktivierungseinheit und Zugriffseinheit ermöglicht (beispielsweise an Stellen ohne beeinträchtigende Abschirmung von Funksignalen, WLAN-Signales etc.) und andererseits eine zuverlässige elektrische Verbindung mit der Systemsteuerung herzustellen ist. Die Zugriffs- und Aktivierungseinheiten müssen ebenfalls zur drahtlosen Datenkommunikation mit der Freischalteinheit ausgestaltet sein. Die Zugriffseinheit löst über die Datenkommunikation mit der Freischalteinheit ein Hochfahren der Systemsteuerung und damit der Nutzungssysteme im Fahrzeug aus. Nach Beendigung der Ladung können diese nach einer entsprechenden Datenkommunikation auch wieder heruntergefahren werden. Damit erhalten Servicemitarbeiter, Mobilladefahrzeuge, autorisierte Paketdienstleister oder Mitarbeiter mit Zugangsberechtigung zum Zugangssystem nach Freigabe der notwendigen Fahrzeug- und Nutzerdaten die Möglichkeit, sich über das erfindungsgemäße Zugangssystem Zugang zum jeweiligen Fahrzeug, für das ein solcher Zugang seitens des Nutzer gewährt werden soll, zu verschaffen.

In einer Ausführungsform ist die Zugriffseinheit und/oder die Aktivierungseinheit zum Aussenden und/oder Empfangen von Signalen und/oder Daten mittels Funk, WLAN oder Nahfeldkommunikation, vorzugsweise RFID, ausgestaltet. Diese Techniken zur drahtlosen Datenkommunikation sind Technologien, mit denen zuverlässig über unterschiedliche Distanzen Daten zwischen zwei Sender- oder Empfangsstationen ausgetauscht werden können, wobei Sender und Empfänger sehr platzsparend bereitgestellt und mit eigenen Stromquellen versehen werden können. Die Aktivierungseinheit kann dabei dazu ausgestaltet sein, die zuvor aktivierte Freischalt-einheit durch ein entsprechendes Signal wieder zu deaktivieren. Somit kann die Deaktivierung einerseits durch einen zeitlichen Ablauf eines Aktivierungszeitraums als auch durch ein aktiv ausgesendetes Signal bewirkt werden. Die Zugriffseinheit kann ebenfalls dazu ausgestaltet sein, nach erfolgreichem Zugriff auf ein Fahrzeug der Freischalteinheit ein Signal zu übermitteln, aufgrund dessen die Freischalteinheit in Zusammenwirkung mit der Systemsteuerung und dem Verriegelungssystem alle zuvor entriegelten Komponenten wieder zu verriegeln.

Die ausgetauschten Daten bei der Datenkommunikation sind dabei so gestaltet, dass die Aktivierungseinheit zumindest Befehlsdaten zur Aktivierung der Freischalteinheit aussendet, die zusätzlich zum Aktivierungsbefehl eine zeitliche Definition der Aktivierungsdauer beinhalten können. Diese Aktivierungsdauer kann eine vorbestimmte Dauer sein oder je nach Wunsch im Einzelfall mittels entsprechender Eingaben in oder für die Aktivierungseinheit spezifiziert werden. Dier Aktivierung kann aber auch zurückgesetzt werden, sobald das Vorgangsende der Ladung eintritt. Die Abschaltung der Aktivierung muss daher nicht zeitdauergesteuert sein, sondern kann auch mit der Beendigung des Ladungsvorgangs durch eine entsprechende Handlung, beispielsweise die Trennung des Ladekabels vom Ladestecker, erfolgen. Die Aktivierungseinheit kann beispielsweise ein funk- oder internetfähiges mobiles Terminal, Smartphone, Tablet-PC, Computer, oder ein anderes digitales Kommunikationsgerät wie beispielsweise ein Transponder sein.

Mit dem erfindungsgemäßen Zugangssystem kann eine Aufladung oder Beladung eines Fahrzeugs mit größerer Flexibilität ohne eine persönliche Anwesenheit des Nutzers zügig und sicher für den Nutzer durchgeführt werden.

Hierbei kann das erfindungsgemäße Zugangssystem durch Aufspielen der zur Ausführung auszuführenden Softwareprogramme (beispielsweise in der Freischalt- und/oder Zugriffseinheit und/oder Aktivierungseinheit) auf andere eventuell bereits bestehende Systeme implementiert oder nachgerüstet werden.

In einer Ausführungsform umfasst die Freischalteinheit eine Prozessoreinheit mit Datenspeicher, auf dem Daten zur Autorisierung der Aktivierungseinheit und/oder der Zugriffseinheit gespeichert sind und die Prozessoreinheit dazu ausgestaltet ist, anhand dieser Daten eine Autorisierungsprüfung durchzuführen. Eine solche Autorisierungsprüfung schützt das erfindungsgemäße Zugangssystem vor missbräuchlichem Zugriff durch Dritte. Die Autorisierungsprüfung kann beispielsweise mittels Abgleich von befugten Zugangscodes, gespeichert auf dem Datenspeicher und einem von einer Aktivierungseinheit übermitteltem Zugangscode, ausgeführt werden. Falls der übermittelte Zugangscode nicht im Datenspeicher vorhanden ist, könnte das Zugangssystem die Aktivierung der Empfangseinheit blockieren. Zur Speicherung von befugten Zugangscodes (oder anderer die Befugnis belegender Daten) kann die Empfangseinheit eine Datenschnittstelle umfassen, die je nach Ausführungsform unterschiedlich ausgestaltet werden könnte, beispielsweise als USB-Schnittstelle oder als Funk- oder Internetschnittstelle zur Eingabe über eine autorisierte Webseite des Betreibers des Zugangssystems.

In einer weiteren Ausführungsform ist die Freischalteinheit dazu ausgestaltet, die Aktivierung erst nach einer erfolgreichen Autorisierungsprüfung der Aktivierungseinheit durchzuführen. Dadurch wird verhindert, dass unbefugte Zugriffseinheiten überhaupt Zugang zum Zugangssystem erlangen können.

In einer weiteren Ausführungsform ist die Freischalteinheit dazu ausgestaltet, im aktivierten Zustand Signale zur Abfrage nach vorhandenen Zugriffseinheiten auszusenden. Somit kann ein Zugriff vereinfacht werden, da die Zugriffseinheit nicht selbst nach der Freischalteinheit suchen muss. Beispielsweise kann nach erfolgreicher Suche der Freischalteinheit nach einer befugten Zugriffseinheit die Freischalteinheit über die Systemsteuerung des Fahrzeugs ein Signal (beispielsweise ein eingeschalteter Blinker) aussenden, um beispielsweise einem Servicemitarbeiter, der die Zugriffseinheit trägt, das Auffinden des betreffenden Fahrzeugs zu erleichtern. Dies könnte gerade in Parkhäusern von Vorteil sein.

In einer weiteren Ausführungsform ist die Zugriffseinheit dazu ausgestaltet, zumindest einen Identifikationscode an die Freischalteinheit zu übermitteln, anhand dessen die Freischalteinheit eine Autorisierungsprüfung der Zugriffseinheit durchführen kann, wobei die Übermittlung der Steuersignale an die Systemsteuerung erst nach erfolgreicher Autorisierungsprüfung der Zugriffseinheit erfolgt. Dadurch wird verhindert, dass unbefugte Zugriffseinheiten Zugang zum Zugangssystem mit aktivierter Freischalteinheit erlangen können. Hier gilt für die Ausgestaltung der Zugriffseinheit und die Durchführung der Autorisierungsprüfung das Gleiche wie bereits voranstehend für die Autorisierungsprüfung der Aktivierungseinheit beschrieben wurde.

In einer weiteren Ausführungsform ist die Zugriffseinheit ein Transponder, der dazu ausgestaltet ist, nach Empfang der Datenkommunikation von der Freischalteinheit zumindest den Identifizierungscode an die Freischalteinheit zu übertragen. Transponder sind kleine und kompakte Einheiten, mit denen identifizierende und weitere inhaltliche Daten einfach übertragen werden können. Transponder können zudem bequem an einer Kleidung oder in einem Fahrzeug der Servicemitarbeiter zur Ausführung der Ladung des Fahrzeugs getragen werden.

In einer weiteren Ausführungsform ist der Transponder ein passiver Transponder. Passive Transponder senden nur Daten in Reaktion auf ein empfangenes Signal aus, indem sie die Energie des empfangenen Signals für die Aussendung eines eigenen Signals verwenden. Passive Transponder begrenzen einerseits räumlich die Reichweite für eine Datenkommunikation mit der Freischalteinheit, was den Sicherheitsstandart des Zugangssystems erhöht, da ein großflächiges Scannen von aktivierten Freischalteinheiten zum Zwecke des Missbrauchs behindert wird und andererseits antworten diese Transponder nur auf aktive Freischalteinheiten, sodass Fahrzeuge mit nicht aktivierten Freischalteinheiten nicht als solche identifiziert beziehungsweise geortet werden können, was ebenfalls die Missbrauchssicherheit des Systems erhöht.

In einer weiteren Ausführungsform ist die Freischalteinheit dazu ausgestaltet, spätestens nach Ablauf des vorbestimmten Zeitraums der Aktivierung die Systemsteuerung anzuweisen, die aufgrund der vorherigen Datenkommunikation mit der Zugriffseinheit entriegelten Komponenten wieder zu verriegeln. Durch die Verriegelung nach Ablauf der Aktivierungszeit wird die Zugriffssicherheit weiter erhöht. Ferner vermeidet die automatische Verriegelung ein versehentliches Vergessen des Verriegelns durch den Servicemitarbeiter bei einem fehlenden entsprechenden Signal durch die Zugriffseinheit.

In einer weiteren Ausführungsform ist die Zugriffseinheit dazu ausgestaltet, nach Abschluss der Ladung des Fahrzeugs eine Verriegelung der entsprechenden Komponenten mittels entsprechender Datenkommunikation mit der Freischalteinheit durch die Systemsteuerung des Fahrzeugs zu veranlassen. Der Abschluss einer erfolgten Ladung kann beispielsweise über das Verschließen der zuvor entriegelten Komponenten festgestellt werden. Die Verriegelung erfolgt damit automatisch ohne weitere durch den die Zugriffseinheit tragenden oder bedienenden Servicemitarbeiter auszuführenden Schritte und erleichtert die Handhabung des Zugangssystems. Gleichzeitig wird die Sicherheit des Zugangssystems erhöht, da ein versehentliches Nicht-Verriegeln ausgeschlossen wird.

In einer weiteren Ausführungsform ist die Freischalteinheit dazu ausgestaltet, nach erfolgter Verriegelung der Komponenten des Fahrzeugs der Aktivierungseinheit und/oder der Zugriffseinheit charakteristische Daten über die erfolgte Ladung des Fahrzeugs zu übertragen. Diese Datenübertragung ermöglicht eine Protokollierung des Ladevorgangs und kann zur späteren Abrechnung des Ladeservices verwendet werden. Die Datenübertragung zur Aktivierungseinheit, üblicherweise unter Kontrolle des Besitzers oder Nutzers des Fahrzeugs, stellt zudem eine Quittung über den Ladevorgang für den Besitzer oder Nutzer dar.

In einer weiteren Ausführungsform ist die Freischalteinheit für eine reversible Anordnung im Fahrzeug und zur Verbindung mit der Systemsteuerung ausgestaltet. Das ermöglicht die Nachrüstung von Fahrzeugen mit dem erfindungsgemäßen digitalen Zugangssystem. Der Fachmann ist in der Lage, die dafür benötigten Anschüsse und Schnittstellen für die Freischalteinheit geeignet auszugestalten.

Das Zugangssystem umfasst ein Hintergrund-Computersystem, das so ausgestaltet ist, das es zumindest eine Registrierung von Nutzern und eine Eintragung von Daten der Fahrzeuge und/oder der Freischalteinheiten und/oder der Zugriffseinheiten und/oder der Aktivierungseinheiten sowie deren Zuordnung zu den Fahrzeugen und/oder Nutzern ermöglicht und eine geeignete Übertragung von Daten (beispielsweise Zeitdauer, Nutzerdaten, Ladedaten) an die Freischalteinheit zur Ermöglichung einer Autorisierungsprüfung durch die Freischalteinheit durchführt. Ein vom Nutzer abgestelltes Fahrzeug kann beispielsweise über ein Kundenkonto im Hintergrund-Computersystem und den darin eingetragenen Ortsdaten von den mit der Ladung beauftragten Servicemitarbeitern gefunden werden. In einer Ausführungsform ist die Aktivierungseinheit ein Smartphone mit einer darauf installierten Applikation, die über ein Positionsortungssystem (beispielsweise ein GPS-System) den Fahrzeugstandort im Hintergrund-Computersystem speichert, beispielsweise beim Verlassen des Fahrzeugs durch den Nutzer. Über das Hintergrund-Computersystem kann der Nutzer Ladungen des Fahrzeugs bestellen, beispielsweise eine Übernachtaufladung seines Elektrofahrzeugs beispielsweise auf einem öffentlich zugänglichen Parkplatz, zu dem ein entsprechendes Ladefahrzeug mittels des im Hintergrund-Computersystem hinterlegten Fahrzeugstandortes gelangt. Das Servicefahrzeug kann für verschiedene Elektrofahrzeuge mit den jeweils geeigneten Kabelverbindungen (Steckern) ausgestattet sein und über mobile AC- oder DC-Ladestationen gegebenenfalls mit variabel einstellbaren Ladespannungen verfügen. Die jeweilige Beauftragung zu einer Ladung und gegebenenfalls die Freigabe der Autorisierungsdaten für die Freischalteinheit sowie anderer kommunizierter Daten kann beispielsweise über ein Distributed Ledger Technology (DLT)-Programm-System, insbesondere Blockchain-Programm-System im Rahmen des Hintergrund-Computersystems erfolgen. Das Hintergrund-Computersystem kann dazu ein oder mehrere miteinander verbundene Server umfassen, die beispielsweise über geeignete Schnittstellen auch in der Lage sein können, mit den Aktivierungseinheiten und Zugriffseinheiten zu kommunizieren. Ein solches Hintergrund-Computersystem erleichtert den Betrieb des digitalen Zugangssystems und die Abrechnung von Servicedienstleistungen und erhöht bei entsprechender Ausgestaltung mit Zugangskontrollen und Vergabe zu Zugangsrechten die Sicherheit des Zugangssystems. Bei einer Übertragung weiterer fahrbezogener Daten durch die Freischalteinheit kann das Hintergrund-Computersystem auch weitere Dienstleistungen abrechnen, wie beispielsweise kilometerbezogene Kraftfahrzeugsteuern oder Park- und Mautgebühren. In einer weiteren Ausführungsform erfolgen daher die Datenkommunikationen verschlüsselt.

Das Fahrzeug ist ein Elektrofahrzeug und die von der Freischalteinheit an die Systemsteuerung übermittelten Steuersignale sind dazu vorgesehen, zumindest eine Aufladung des Elektrofahrzeugs oder eine Öffnung eines Kofferraums und/oder einer Ladefläche mittels Freigabe der entsprechenden Komponenten des Elektrofahrzeugs zu ermöglichen. Der Begriff Elektrofahrzeuge bezeichnet hierbei Fahrzeuge, die mit mindestens einem Elektroantrieb versehen sind. Dies umfasst auch Hybridfahrzeuge, die neben einem Elektroantrieb einen weiteren Antrieb wie beispielsweise eine Brennstoffzelle oder einen Verbrennungsmotor umfassen oder nur ergänzend mit einem Elektroantrieb ausgestattet sind. Hiermit wird erreicht, dass das Elektrofahrzeug mit einem Steuersystem im Ruhezustand unabhängig von der Anwesenheit eines Nutzers oder Besitzers des Elektrofahrzeugs von außen dennoch aufgeladen beziehungsweise mit Gütern beladen werden kann.

Die Erfindung betrifft des Weiteren ein Fahrzeug mit einem Verriegelungssystem und einer Steuerungseinheit, zumindest zur Steuerung des Verriegelungssystems sowie einem erfindungsgemäßen digitalen Zugangssystem, umfassend mindestens eine Zugriffseinheit und mindestens eine Aktivierungseinheit zur Verwendung außerhalb des Fahrzeugs und eine Freischalteinheit, die in dem Fahrzeug positioniert und mit der Steuerungseinheit geeignet verbunden ist, um mittels Ansteuerung des Verriegelungssystems und Freigabe zumindest einer verriegelnden Komponente den Zugang zum Fahrzeug zu dessen Ladung zu ermöglichen.

Mit dem erfindungsgemäßen Fahrzeug kann eine Ladung eines Fahrzeugs mit größerer Flexibilität ohne eine persönliche Anwesenheit des Nutzers zügig und sicher für den Nutzer durchgeführt werden.

In einer Ausführungsform ist die Freischalteinheit mit einer Empfangsantenne des Fahrzeugs verbunden. Das steigert die Zuverlässigkeit einer Datenkommunikation mit der Aktivierungseinheit und/oder der Zugriffseinheit.

In einer weiteren Ausführungsform ist die Freischalteinheit im Fahrzeug an einer von außen und/oder vom Innenraum des Fahrzeugs unzugänglichen Stelle angeordnet. Dies erhöht die Diebstahlsicherheit für die Freischalteinheit und verhindert die Kenntnisnahme von Unbefugten, dass eine solche Freischalteinheit im Fahrzeug angeordnet ist.

In einer weiteren Ausführungsform ist die Freischalteinheit reversibel im Fahrzeug installiert. Damit kann das erfindungsgemäße Zugangssystem in Fahrzeugen nachgerüstet und bei Bedarf aus diesen auch wieder unkompliziert entfernt werden.

Das Fahrzeug ist ein Elektrofahrzeug und die von der Freischalteinheit an die Systemsteuerung übermittelten Steuersignale sind dazu vorgesehen, zumindest eine Aufladung des Elektrofahrzeugs oder eine Öffnung eines Kofferraums und/oder einer Ladefläche mittels Freigabe von entsprechenden Komponenten des Elektrofahrzeugs zu ermöglichen. Damit ist das Zugangssystem auch auf Elektrofahrzeuge anzuwenden. Hiermit wird erreicht, dass mit einem Steuersystem im Ruhezustand unabhängig von der Anwesenheit eines Nutzers oder Besitzers des Elektrofahrzeugs eine Ladung von außen möglich ist.

In einer weiteren Ausführungsform ist vorgesehen, dass die Systemsteuerung des Fahrzeugs aufgrund des Steuersignals der Freigabeeinheit bei gewünschter Aufladung des Elektrofahrzeugs eine Tankklappe als eine der Komponenten entriegelt und/oder über Diagnoseanschlüsse des Elektrofahrzeugs funktionsfähig freischaltet. Hiermit wird erreicht, dass das Elektrofahrzeug mit einem Steuersystem im Ruhezustand unabhängig von der Anwesenheit eines Nutzers oder Besitzers des Elektrofahrzeugs von außen dennoch aufgeladen werden kann.

Die Erfindung betrifft des Weiteren ein Verfahren zur Gewährung einer Zugangsberechtigung zu einem Fahrzeug mit einem Verriegelungssystem und einer Steuerungseinheit zumindest zur Steuerung des Verriegelungssystems sowie einem in dem Fahrzeug eingebauten erfindungsgemäßen digitalen Zugangssystem, umfassend mindestens eine Zugriffseinheit und mindestens eine Aktivierungseinheit zur Verwendung außerhalb des Fahrzeugs und eine im Fahrzeug positionierte und mit der Steuerungseinheit geeignet verbundene Freischalteinheit, umfassend folgende Schritte:
- Aktivieren der Freischalteinheit zumindest für einen Zeitraum durch die sich außerhalb des Fahrzeugs befindliche Aktivierungseinheit mittels drahtloser Datenkommunikation zu der Freischalteinheit;
- Veranlassen eines Zugangs von außen zu dem Fahrzeug durch die sich ebenfalls außerhalb des Fahrzeugs befindliche Zugriffseinheit mittels einer zur vorherigen Datenkommunikation separaten unabhängigen drahtlosen Datenkommunikation mit der durch die Aktivierungseinheit vorher aktivierten Empfangseinheit;
- Übermitteln von Steuersignalen, die einen Zugang an die Systemsteuerung durch die Freischalteinheit in Reaktion auf die Datenkommunikation mit der Zugriffseinheit veranlassen; und
- Ansteuerung des Verriegelungssystems und Freigabe zumindest einer verriegelnden Komponente zur Ermöglichung des Zugangs zum Fahrzeug zu dessen Ladung durch die Systemsteuerung.

Mit dem erfindungsgemäßen Verfahren kann eine Ladung eines Fahrzeugs mit größerer Flexibilität ohne eine persönliche Anwesenheit des Nutzers zügig und sicher für den Nutzer durchgeführt werden.

In einer Ausführungsform des Verfahrens, wobei die Freischalteinheit eine Prozessoreinheit mit Datenspeicher umfasst, auf dem Daten zur Autorisierung der Aktivierungseinheit und/oder der Zugriffseinheit gespeichert sind, umfasst dieses die weiteren Schritte:
- Durchführen einer Autorisierungsprüfung der Aktivierungseinheit anhand dieser Daten durch die Prozessoreinheit und Aktivieren der Freischalteinheit erst nach Erfolg der Autorisierungsprüfung der Aktivierungseinheit, und/oder
- Durchführen einer Autorisierungsprüfung der Zugriffseinheit anhand eines von der Zugriffseinheit an die Freischalteinheit übermittelten Identifikationscodes durch die Prozessoreinheit und Übermitteln der Steuersignale erst nach Erfolg der Autorisierungsprüfung der Zugriffseinheit.

In einer weiteren Ausführungsform des Verfahrens umfasst dieses den oder die weiteren Schritte:
- Anweisen der Systemsteuerung durch die Freischalteinheit spätestens nach Ablauf des vorbestimmten Zeitraums der Aktivierung, die Komponenten zur Ladung des Fahrzeugs zu verriegeln, sofern diese aufgrund der vorherigen Datenkommunikation mit der Zugriffseinheit entriegelt wurden; und/oder
- Verriegeln der entsprechenden Komponenten durch die Systemsteuerung des Fahrzeugs nach Abschluss der Ladung des Fahrzeugs nach entsprechender Datenkommunikation zwischen Zugriffseinheit und Freischalteinheit.

In einer weiteren Ausführungsform des Verfahrens umfasst dieses den weiteren Schritt:
- Übertragen von charakteristischen Daten über die erfolgte Ladung des Fahrzeugs durch die Freischalteinheit an die Aktivierungseinheit und/oder an die Zugriffseinheit nach erfolgter Verriegelung der Komponenten des Fahrzeugs.

In einer weiteren Ausführungsform des Verfahrens, wobei das Fahrzeug ein Elektrofahrzeug ist, ermöglicht das Übermitteln von den Zugang veranlassenden Steuersignalen an die Systemsteuerung zumindest eine Aufladung des Elektrofahrzeugs oder eine Öffnung eines Kofferraums und/oder einer Ladefläche mittels Freigabe der entsprechenden Komponenten des Elektrofahrzeugs.

Die voranstehend aufgelisteten Ausführungsformen können einzeln oder in beliebiger Kombination zueinander zur Ausgestaltung der erfindungsgemäßen Vorrichtung und des Verfahrens verwendet werden.

Insbesondere ermöglicht es das zuvor beschriebene digitale Zugangssystem, ein Fahrzeug mit einem solchen Verriegelungssystem sowie das Verfahren zur Gewährung einer Zugangsberechtigung zu einem Fahrzeug mit einem Verriegelungssystem, dass Ladesysteme eingesetzt werden, bei denen eine dynamische Aufladung des als Elektrofahrzeug ausgebildeten Fahrzeugs mittels mobiler Ladefahrzeuge realisierbar ist.

Im nachfolgenden wird ein solches Ladesystem zur dynamischen Aufladung von Elektrofahrzeugen, insbesondere eines Akkumulators eines zuvor beschriebenen Fahrzeugs mit einem zuvor beschriebenen digitalen Zugangssystem mit einer entsprechenden Software-Applikation, die Teil des Computer-Hintergrund-Systems sein kann, insbesondere dieses zumindest teilweise umfasst, und ein entsprechendes Verfahren sowie ein Datenspeicherprodukt mit darauf gespeicherter Software-Applikation beschrieben.

Wie zuvor beschrieben werden zur Abdeckung des Energiebedarfs von Elektrofahrzeugen Stromtankstellen genutzt, die die dafür benötigte elektrische Energie bereitstellen. Mit steigender Anzahl von Elektrofahrzeugen und dem Wunsch verbesserter Mobilität, insbesondere für Fernfahrten, ergibt sich die Problematik, dass unterschiedliche Nutzer mit unterschiedlichen Ladeanforderungen Stromtankstellen besuchen müssen, die möglicherweise weit abseits ihrer geplanten Fahrroute liegen und deren Ladekapazität oder Verfügbarkeit von Ladesäulen aufgrund eines zeitbedingten großen Andrangs an Kunden erschöpft sind und somit weitere Umwege in Kauf genommen werden müssen, ohne dass dabei die Elektrobatterie des Elektrofahrzeugs erschöpft werden darf.

Dokument US 2015/0298565 A1 offenbart ein Ladeunterstützungssystem und ein entsprechendes Verfahren zur Unterstützung der Ladung eines Elektrofahrzeugs, das verhindern soll, dass Elektrofahrzeuge vor Erreichung ihres Fahrziels die Batterie entleeren und liegenbleiben. Ein Kontrollcenter überwacht dazu den Ladezustand einer Vielzahl an Elektrofahrzeugen und übermittelt diesen bei geringem Ladezustand eine Aufforderung, eine sich an einem bestimmten Punkt ortsfest befindliche Stromladestation anzufahren und führt die Elektrofahrzeuge zu einer dafür geeigneten Stromladestation, wobei für die Auswahl der Stromladestation die Gegebenheiten der Stromladestation (Anzahl an der dort verfügbaren Energiemenge, erwarteter Kundenandrang etc.) berücksichtigt werden.

Damit kann zwar verhindert werden, dass Elektrofahrzeuge während einer Überlandfahrt wegen entleerter Batterie liegenbleiben.

Es ist ersichtlich, dass das digitale Zugangssystem eine dynamische Ladung dadurch unterstützen kann, dass dem Ladefahrzeug, insbesondere einem Insassen, wie einem Fahrer, einer Serviceperson oder einem anderen Mitarbeiter, ermöglicht wird, Zugang zu dem Elektrofahrzeug zur Ladung des Energiespeichers bzw. Akkumulators gewährt wird. So kann beispielsweise eine Ladeklappe für eine elektrische Ladung des Elektrofahrzeugs freigegeben werden. Dazu werden dem Ladefahrzeug bzw. dem Insassen Daten zum Aktivieren der Freischalteinheit zumindest für einen Zeitraum durch die Aktivierungseinheit übermittelt.

Die Aktivierung der Freischalteinheit kann insbesondere wie folgt durchgeführt werden. Wesentliche Komponenten sind dabei die Software-Applikation, die mit dem zu ladenden Fahrzeug wechselwirkt. Bei der Software-Applikation handelt es sich insbesondere um eine servergestützte Applikation, welche insbesondere eingehende Informationen der zu ladenden Fahrzeuge und/oder der Ladefahrzeuge auswertet, die Ladefahrzeuge steuert, Treffpunkte festlegt und/oder die Abrechnung regelt.

Die Wechselwirkung mit dem zu ladenden Fahrzeug kann dadurch erreicht werden, dass die Software-Applikation teilweise auf einem Mobilgerät installiert ist und/oder auf einem Mobilgerät eine mit der Software-Applikation verbundene mobile Applikation installiert ist und ausgeführt wird, wobei insbesondere über eine OBD2-Schnittstelle des Fahrzeugs Zugriff auf notwendige Fahrzeugdaten zur Verfügung gestellt wird.

Vorzugsweise erfolgt die Kommunikation zwischen den auf dem Server und dem Mobilgerät installierten Teilen der Software-Applikation, insbesondere die Weiterleitung und Speicherung der insbesondere für die Steuerung des Zugangs zu dem zu ladenden Fahrzeug, die Ladung des zu ladenden Fahrzeugs und die Abrechnung der Ladung notwendigen Daten, unter Einsatz von DLT, insbesondere über eine Block-Chain-Anwendung. Dadurch wird eine mehrfach redundante Sicherheit für alle Regelungs-, Vertrags- und Abrechnungsvorgänge herstellt, die jedoch im definierten Bereich transparent für alle Partner ist.

Beispielswiese erhält das Mobilgerät bzw. die mobile Applikation über die OBD2-Schnittstelle alle wesentlichen Informationen vom zu ladenden Fahrzeug, wie z.B. Fahrweise, Ladekapazität und Ladezustand des Akkumulators, Temperatur und Position.

Der auf dem Mobilgerät ausgeführte Teil der Software-Applikation bzw. die mobile Applikation kennt darüber hinaus das Reiseziel, wenn notwendig den Abstellplatz des zu ladenden Fahrzeugs, hat Zugriff auf Navigationsdaten und Verkehrslage und ist mit dem Internet verbunden.

Die Software-Applikation berechnet, wann das zu ladende Fahrzeug sich mit einem Ladefahrzeug wo treffen muss und wieviel elektrische Energie benötigt wird.

Dabei wird die DLT, insbesondere Blockchaintechnologie, genutzt, um die entsprechenden Daten an den Server zu übermitteln bzw. diese Daten zu speichern. Der Server, mittels dem die zu ladenden Fahrzeuge und die Ladefahrzeuge überwacht werden, bestätigt über die DLT bzw. Blockchain dem auf dem Mobilgerät ausgeführten Teil der Software-Applikation bzw. der mobilen Applikation das Treffen des zu ladenden Fahrzeugs und den geplanten Treffpunkt. Diese sind jedoch nicht statisch, sondern können aufgrund von der Software-Applikation und/oder der mobilen Applikation erfassten Veränderungen angepasst werden.

Die Software-Applikation erhält ferner auch Daten, die es ermöglichen, über das Zugangssystem dem Ladefahrzeug einen Zugang zu dem zu ladenden Fahrzeug für die Ladung zu ermöglichen. Dies kann unabhängig von der Verwendung der DLT bzw. Blockchaintechnologie erfolgen. Bevorzugt ist dabei, dass die Daten nur über eine begrenzte Gültigkeitsdauer verfügen, die an den geplanten Zeitpunkt des Treffens zwischen Ladefahrzeug und zu ladendem Fahrzeug angepasst ist. Bevorzugt ermöglichen die Daten nur einen Zugang eine bestimmte Zeit vor bzw. nach einem berechneten Zeitpunkt des Treffens. Die Daten können beispielsweise einen Code umfassen, der nur einmalig genutzt werden kann. Nach der einmaligen Nutzung oder dem Verstreichen des Gültigkeitszeitraumes kann der Code nicht mehr für einen Zugang zu dem zu ladenden Fahrzeug genutzt werden. Die zum Zugang notwendigen Daten werden insbesondere wie folgt generiert bzw. übertragen.

Persönliche Daten der Beteiligten Personen, wie zum Beispiel Bewegungsprofile, verbleiben als hochsensible Daten innerhalb der auf dem Mobilgerät ausgeführten Teil der Softwareapplikation bzw. der mobilen Applikation in dem zu ladenden Fahrzeug. Das Mobilgerät meldet nur eine ID des Kunden und Zeit und den Ort des geplanten Treffpunktes an den Server. Dabei erfolgt die Übertragung der Daten insbesondere über die DLT bzw. Blockchain verschlüsselt.

Für jeden Ladevorgang wird dabei ein neuer DLT bzw. Blockchain Vorgang generiert. Auch neue Aufträge des gleichen Kunden oder Wiederholungsaufträge führen zu einem neuen DLT bzw. Blockchain-Vorgang. Auf diese Weise wird verhindert, dass individuelle Auftragsdaten, Zugangscodes oder andere mit dem Ladevorgang in Zusammenhang stehende Daten wiederverwendet werden können, nachdem der Ladevorgang abgeschlossen und die Blockchain geschlossen wurde. Aufgrund der Verschlüsselung durch die DLT bzw. Blockchain ist ein Abfischen von diesen Daten nicht so möglich, dass die Daten missbraucht werden können, da die Daten nutzlos für andere Lade- bzw. Zahlungsvorgänge sind. So ist jeder Ladeauftrag einmalig und aufgrund der DLT bzw. Blockchain Technologie nicht veränderbar.

Mit einem einzelnen Blockchainvorgang wird eine individuelle Auftragsnummer verknüpft, mit der nur ein einzelner Ladevorgang bzw. Ladeauftrag ausgelöst werden kann.

Der Server kann insbesondere als ein leistungsstarker geclusterter Server ausgebildet sein oder als Cloudanwendung ausgebildet sein. Der Server steuert alle Ladefahrzeuge und handelt mit dem zu ladenden Fahrzeug mögliche Treffpunkte innerhalb der übermittelten Parameter aus. Dazu werden von der Software-Applikation mittels Blockchain alle für die Abarbeitung des Ladevorgangs notwendigen Daten ermittelt, mit den realen Gegebenheiten und Möglichkeiten abgeglichen und dem Benutzer des zu ladenden Fahrzeugs eine Auftragsbestätigung angeboten. Kommt es zu einer Annahme der Auftragsbestätigung, werden die für den Ladevorgang notwendigen Daten, insbesondere Code für das Zugangssystem, Treffpunkt, Treffpunktzeit an das zu ladende Fahrzeug, das Ladefahrzeug, insbesondere den Betreiber des zu ladenden Fahrzeugs bzw. den Betreiber des Ladefahrzeugs, übermittelt.

Ferner wird über die Software-Applikation die Durchführung der Ladung veranlasst und überwacht, wobei dieser Vorgang, insbesondere aufgrund der Verwendung der Blockchain-Technologie, nach Annahme der Auftragsbestätigung um einen automatischen Ablauf, in den grundsätzlich nicht eingegriffen werden kann. Kommt es zu einer Panne eines Ladefahrzeugs wird ein neuer Blockchain Vorgang generiert und dieser dann mit einem alternativen Ladefahrzeug durchgeführt.

Die Verwendung der DLT bzw. Blockchain bietet den Vorteil, dass auf bestehende Blockchain-Anwendung aufgebaut werden kann und damit neben der logistischen Abwicklung des Ladevorganges auch Zahlungs- und Abrechnungsvorgänge bzw. deren Formalitäten abgewickelt werden können.

Der Server bzw. die Software-Applikation kann alle Verträge mit den Betreibern der zu ladenden Fahrzeuge bzw. der Ladefahrzeuge verwalten, alle Vorgänge abrechnen und steuern.

Der Server bietet ferner über die DLT- bzw. Blockchain eine Schnittstelle zu Partnern, wie Stromanbietern, anderen Anbietern von Ladefahrzeugen oder dem Flottenmanagement von Firmen und Organisationen.

Die DLT bzw. Blockchain kann als ERC20/ERC223 Lösung realisiert sein und insbesondere auf einer bestehenden Blockchain-Anwendung ablaufen.

Aus dem zuvor angeführten ergibt sich der Vorteil, dass die in dem Ladesystem verwendete DLT bzw. Blockchain Technologie die Aufgabe einer dezentralen mehrfach redundanten Datenbank wahrnimmt und die Möglichkeit bietet, darüber hinaus das Vertragsmanagement über Smart Contracts (elektronische automatische Verträge) mit hoher Sicherheit durchzuführen und zu automatisieren.

Es wird so möglich, eine verschlüsselte Verbindung zum Austausch der notwendigen Daten zwischen allen Parteien bereitzustellen, wobei bevorzugt durch Smart Contracts geregelt wird, wer Zugriff auf welche Daten hat und wer welche Informationen wie einsehen kann.

Die Abrechnung kann bevorzugt über eigene Token, welche vorzugsweise ebenfalls durch Smart Contracts mit klassischen Zahlungsanbietern, wie Kreditkartenanbietern, am SEPA-Zahlungsverkehr Beteiligten und/oder Anbietern wie PayPal, verbunden sind, erfolgen. Durch die Verwendung der DLT bzw. Blockchain-Technologie ist eine Optimierung von Kosten aufgrund der reduzierten für die Abwicklung der Ladung notwendigen Hard- und Software-Struktur sowie den hohen Grad an Automatisierung und der damit einhergehenden Reduzierung manueller Eingriffe möglich, ohne die Sicherheit zu reduzieren. Ferner verbessert die Verwendung dieser Technologie sichere und klar geregelte Kommunikationsmöglichkeiten zwischen einer unbegrenzten Anzahl von Partnern. Die Server- oder Cloudressourcen sowie die Software-Applikation bzw. die mobile Applikation müssen keine angreifbaren Schnittstellen öffnen.

Das zuvor beschriebene Ladesystem zur dynamischen Aufladung kann gemäß der folgenden Beispiele realisiert sein, wobei diese Realisierung zusätzlich oder unabhängig von dem beanspruchten digitalen Zugangssystem realisiert sein kann.

Das zuvor beschriebene dynamische Ladesystem bzw. der zuvor beschriebene Energiespeicher erlauben insbesondere in Kombination mit dem digitalen Zugangssystem die Durchführung von Ladungen, bei denen der Benutzer des zu ladenden Fahrzeugs nicht anwesend sein muss, beispielsweise eine Nachladung, wenn das zu ladende Fahrzeug von dem Benutzer abgestellt wurde.

Beispielsweise kann eine Anforderung einer Nachtladung durch einen Benutzer eines zu ladenden Fahrzeugs, der insbesondere registrierter Kunde des dynamischen Ladesystems ist, erfolgen. Das digitale Zugangssystem, insbesondere in Verbindung mit dem dynamischen Ladesystem ermöglicht es, dass zu einem beliebigen Zeitpunkt innerhalb eines Zeitfensters mit dem Code einen Zugang zu dem zu ladenden Fahrzeug, ermöglicht wird. Der Code wird insbesondere bei Annahme der Auftragsbestätigung durch den Benutzer erzeugt. Der Code ermöglicht es über die Aktivierungseinheit die Freischalteinheit zu aktivieren um über die Zugriffseinheit beispielsweise die Tankklappe oder einen anderen geeigneten Mechanismus am zu ladenden Fahrzeug sowie die für die Ladung des Fahrzeugs notwendigen Systeme, wie zumindest teilweise das elektrische Betriebssystem, zu aktivieren bzw. zu öffnen können.

Dies ermöglicht es dann, das zu ladende Fahrzeug mit dem per Rendezvoussystem zu dem zu ladenden Fahrzeug gelangten Ladefahrzeug zu verbinden und die Ladung durchzuführen.

Mit dem Schließen der Tankklappe oder alternativ mit Entfernung des Ladekabels bzw. Abschaltung der Aktivierung der zu ladenden Fahrzeugs ist die Ladung abgeschlossen. Der Zugangscode wird vorteilhafterweise automatisch, insbesondere durch das dynamische Ladesystem entwertet und eine erneuter Zugriff mit diesem Code ist nicht möglich. Ferner wird das Fahrzeug vorteilhafterweise wieder automatisch in den Ruhezustand zurückgeführt, also die mittels der Zugriffseinheit aktivierten System wieder deaktiviert.

Auch ist es möglich, dass ein Zugangscode einen Zugriff nur in einem beschränkten Zeitfenster ermöglicht, beispielsweise zwischen 22:00 und 6:30. Ein in diesem Zeitfenster nicht verwendeter Zugangscode kann dann ebenfalls automatisch entwertet werden.

Hervorzuheben ist, dass die Freischalteinheit keinen generellen Zugriff auf das gesamte Fahrzeug bzw. alle Systeme des Fahrzeugs ermöglicht, sondern nur definierte Berechtigungen bereitstellt, wie den Zugang zu der Ladeklappe, während andere Berechtigungen, wie Zugang zum Innenraum, Betätigung von Systemen wie Beleuchtung, Zündung oder dergleichen, nicht erteilt werden. Die Freischalteinheit erlaubt also eine zeitgenaue und zeitbegrenzte Nutzung von bestimmten Systemen des zu ladenden Fahrzeugs, ohne auf andere Systeme Einfluss zu gewinnen oder das Fahrzeug betreten zu können.

Für die Durchführung einer Ladung ohne Anwesenheit des Benutzers des zu ladenden Fahrzeugs ist insbesondere vorgesehen, dass, insbesondere durch die Zugriffseinheit basierend auf dem Zugangscode, ein digitaler Zugriff auf den Stromspeicher des zu ladenden Fahrzeugs gewährt wird, um damit eine notwendige Lademenge festlegen zu können.

Ergänzend oder alternativ kann diese Lademenge, insbesondere über ein vorgegebenes Mengenraster, manuell von dem Benutzer des zu ladenden Fahrzeugs festgelegt werden, beispielsweise wenn ein Zugriff aus technischen Gründen nicht möglich ist oder vom Benutzer nicht gewünscht ist.

### Kurze Beschreibung der Abbildungen

Diese und andere Aspekte der Erfindung bezüglich des digitalen Zugangssystems werden im Detail in den Abbildungen wie folgt gezeigt.
- Fig.1:: schematische Darstellung einer Ausführungsform des erfindungsgemäßen Zugangssystems;
- Fig.2:: schematische Darstellung einer Ausführungsform des erfindungsgemäßen Fahrzeugs mit erfindungsgemäßem Zugangssystem;
- Fig.3:: schematische Darstellung einer Ausführungsform des erfindungsgemäßen Verfahrens.

### Detaillierte Beschreibung der Ausführungsbeispiele

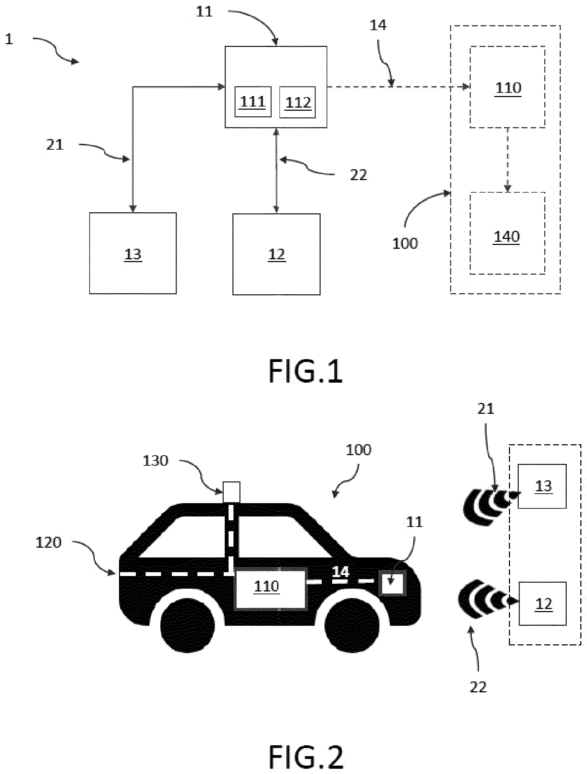

Fig.1 zeigt eine schematische Darstellung einer Ausführungsform des erfindungsgemäßen Zugangssystems 1 zum Einbau in einem Fahrzeug 100 mit einem Verriegelungssystem und zur geeigneten Verbindung mit einer Systemsteuerung 110 des Fahrzeugs 100 (daher gestrichelt gezeigt), wobei das Zugangssystem 1 eine Freischalteinheit 11 zur Positionierung in dem Fahrzeug 100 sowie eine Zugriffseinheit 12 und eine Aktivierungseinheit 13 zur Verwendung außerhalb des Fahrzeugs 100 umfasst. In anderen Ausführungsformen können auch mehrere Aktivierungs- und Zugriffseinheiten für das gleiche Fahrzeug 100 verwendet werden. Die Aktivierungseinheit 13 (beispielsweise ein mobiles Terminal, Smartphone, Tablet-PC, eine Webseite im Internet etc.) aktiviert dabei mittels drahtloser Datenkommunikation 21 die Freischalteinheit 11 dauerhaft oder für einen limitierten Zeitraum, beispielsweise ein vorbestimmter Zeitraum. Die Zugriffseinheit 12 veranlasst dann mittels einer zur vorherigen Datenkommunikation 21 separaten unabhängigen drahtlosen Datenkommunikation 22 über die vorher aktivierte Empfangseinheit 11 einen Zugang zum Fahrzeug 100 von außen, wozu die Freischalteinheit 11 in Reaktion auf die Datenkommunikation 22 den Zugang veranlassende Steuersignale 14 an die Systemsteuerung 110 zur Ansteuerung des Verriegelungssystems und Freigabe zumindest einer verriegelnden Komponente 140 zur Ermöglichung des Zugangs zum Fahrzeug zu dessen Ladung übermittelt. Die Datenkommunikation kann dabei mittels Funk, WLAN oder Nahfeldkommunikation, vorzugsweise RFID, durchgeführt werden, wozu die Freischalt- Aktivierungs- und Zugriffseinheiten mit entsprechenden Sende- und/oder Empfangsmodulen geeignet ausgestaltet sind. Die Datenkommunikationen 21, 22 kann zudem verschlüsselt erfolgen. Die Freischalteinheit 11 umfasst hier außerdem eine Prozessoreinheit 111 mit Datenspeicher 112, auf dem Daten zur Autorisierung der Aktivierungseinheit 13 und/oder der Zugriffseinheit 12 gespeichert sind. Die Prozessoreinheit 111 ist dabei dazu ausgestaltet, anhand dieser Daten eine Autorisierungsprüfung für die Aktivierungs- und Zugriffseinheiten durchzuführen. Hierbei kann die Zugriffseinheit 12 beispielsweise einen Identifikationscode an die Freischalteinheit 11 übermitteln, anhand dessen die Freischalteinheit 11 die Autorisierungsprüfung durchführt. Die Freischalt-einheit 11 kann dazu ausgestaltet sein, im aktivierten Zustand Signale zur Abfrage nach vorhandenen Zugriffseinheiten 12 auszusenden. Die Zugriffseinheit 12 kann dabei ein Transponder (aktiver oder passiver) sein, der nach Empfang der Datenkommunikation 22 von der Freischalteinheit 11 den Identifizierungscode an die Freischalteinheit 11 überträgt. Die Freischalteinheit 11 kann des Weiteren geeignete Schnittstellen zum Anschluss an die Systemsteuerung 110 des Fahrzeugs 100 umfassen, damit sie reversibel in dem Fahrzeug angeordnet werden kann. Das Zugangssystem 1 kann des Weiteren ein Hintergrund-Computersystem (hier nicht explizit gezeigt) umfassen, das so ausgestaltet ist, dass es zumindest eine Registrierung von Nutzern 3 und eine Eintragung von Daten der Fahrzeuge 100 und/oder der Freischalteinheiten 11 und/oder der Zugriffseinheiten 12 und/oder der Aktivierungseinheiten 13 sowie deren Zuordnung zu den Fahrzeugen 100 und/oder Nutzern 3 ermöglicht und eine geeignete Übertragung von Daten an die Freischalteinheit 11 zumindest zu Ermöglichung eine Autorisierungsprüfung durch die Freischalteinheit 11 durchführt.

Fig.2 zeigt eine schematische Darstellung einer Ausführungsform des erfindungsgemäßen Fahrzeugs 100 mit erfindungsgemäßem Zugangssystem 1 gemäß Figur 1. Das Fahrzeug 100 umfasst ein Verriegelungssystem (hier nicht explizit gezeigt) und eine Steuerungseinheit 110 unter anderem zur Steuerung des Verriegelungssystems. Das digitale Zugangssystem 1 umfasst eine Zugriffseinheit 12 und eine Aktivierungseinheit 13, die außerhalb des Fahrzeugs zur Aktivierung der Freischalteinheit 11 und zur Veranlassung des Zugangs von außen zum Fahrzeug verwendet werden. Die Zugriffseinheit 12 und die Aktivierungseinheit 13 können dabei zwei separate Geräte sein oder in einer anderen Ausführungsform in einem gemeinsamen Gerät integriert sein, wie durch das gestrichelte Rechteck angedeutet ist. Damit dieser Zugang gewährt und freigegeben werden kann, ist eine Freischalteinheit 11 in dem Fahrzeug 100 positioniert und mit der Steuerungseinheit 110 geeignet verbunden, um mittels Ansteuerung des Verriegelungssystems und Freigabe zumindest einer verriegelnden Komponente 140 den Zugang zum Fahrzeug zu dessen Ladung zu ermöglichen. Für eine bessere Datenkommunikation 21, 22 ist die Freischalt-einheit 11 hier mit der Empfangsantenne 130 des Fahrzeugs 100 verbunden (gestrichelt gezeigt). Die Freischalteinheit 11 ist in dieser Ausführungsform innerhalb des Kotflügelmaterials des Fahrzeugs 100 und damit an einer von außen und vom Innenraum des Fahrzeugs 100 unzugänglichen Stelle angeordnet. Die Freischalteinheit 11 könnte aber auch reversibel im Fahrzeug 100 installiert sein, beispielsweise an der Frontscheibe des Fahrzeugs. Die Ladung des Fahrzeugs 100 kann beispielsweise durch eine Öffnung eines Kofferraums und/oder einer Ladefläche 120 des Fahrzeugs 100 mittels Freigabe entsprechenden Komponenten 140 des Elektrofahrzeugs 100 durch die von der Freischalt-einheit 11 an die Systemsteuerung 110 ausgesendeten Steuersignale 14 ermöglicht werden. Im Falle eines Fahrzeugs 100 als Elektrofahrzeug können die von der Freischalteinheit 11 an die Systemsteuerung 110 übermittelten Steuersignale 14 auch eine Aufladung des Elektrofahrzeugs 100 ermöglichen. Hierbei entriegelt die Systemsteuerung 110 aufgrund des Steuersignals 14 bei gewünschter Aufladung des Elektrofahrzeugs 100 eine Tankklappe und die Ladesteuerung des Elektrofahrzeugs 100 beziehungsweise schaltet diese funktionsfähig frei.

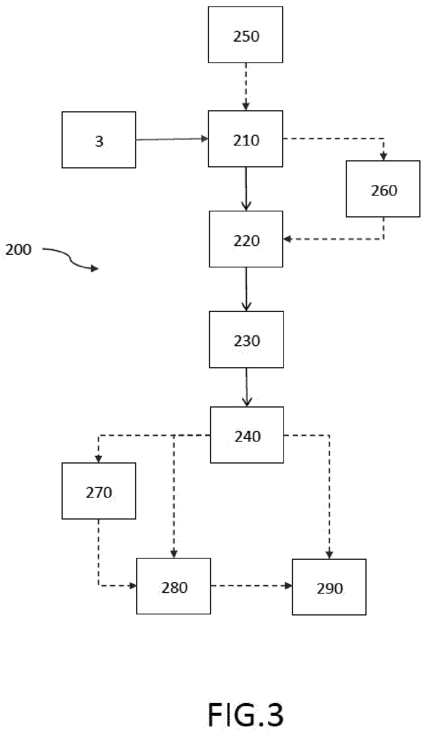

Fig.3 zeigt eine schematische Darstellung einer Ausführungsform des erfindungsgemäßen Verfahrens 200 zur Gewährung einer Zugangsberechtigung zu einem Fahrzeug 100 mit einem Verriegelungssystem und einer Steuerungseinheit 110 zumindest zur Steuerung des Verriegelungssystems sowie einem in dem Fahrzeug 100 eingebauten erfindungsgemäßen digitalen Zugangssystem 1 wie in den Figuren 1 und 2 gezeigt. Das Verfahren umfasst dabei die folgenden Schritte des Aktivierens 210 der Freischalteinheit 11 zumindest für einen vorbestimmten Zeitraum durch die sich außerhalb des Fahrzeugs 100 befindliche Aktivierungseinheit 13 mittels drahtloser Datenkommunikation 21 zu der Freischalteinheit 11. Dem Schritt des Aktivierens kann das Durchführen 250 einer Autorisierungsprüfung der Aktivierungseinheit 13 anhand von Daten zur Autorisierung der Aktivierungseinheit 13 durch eine Prozessoreinheit 111 der Freischalteinheit vorgeschaltet sein, wobei das Aktivieren 210 der Freischalteinheit 11 dann erst nach Erfolg der Autorisierungsprüfung der Aktivierungseinheit 13 erfolgt. Die Freischalteinheit 11 kann dafür auch einen Datenspeicher 112 zum Speicher dieser Daten für die Aktivierungseinheit und/oder die Zugriffseinheit umfassen. Nach dem Aktivieren 210 erfolgt der Schritt des Veranlassens 220 eines Zugangs von außen zu dem Fahrzeug 100 durch die sich ebenfalls außerhalb des Fahrzeugs 100 befindliche Zugriffseinheit 12 mittels einer zur vorherigen Datenkommunikation 21 separaten unabhängigen drahtlosen Datenkommunikation 22 mit der durch die Aktivierungseinheit 13 vorher aktivierten Empfangseinheit 11. Dem Schritt des Veranlassens 220 kann das Durchführen 260 einer Autorisierungsprüfung der Zugriffseinheit anhand eines von der Zugriffseinheit an die Freischalteinheit 13 übermittelten Identifikationscodes durch die Prozessoreinheit 111 vorgeschaltet sein. Nachfolgend erfolgt ein Übermitteln 230 von den Zugang veranlassenden Steuersignalen 14 an die Systemsteuerung 110 durch die Freischalteinheit 11 in Reaktion auf die Datenkommunikation 22 mit der Zugriffseinheit 12, wobei das Übermitteln 230 der Steuersignale erst nach Erfolg der Autorisierungsprüfung der Zugriffseinheit 12 erfolgen kann. Anschließend erfolgt eine Ansteuerung 240 des Verriegelungssystems und Freigabe zumindest einer verriegelnden Komponente 140 zur Ermöglichung des Zugangs zum Fahrzeug zu dessen Ladung durch die Systemsteuerung 110. In einer Ausführungsform können zusätzlich die weiteren Schritte des Anweisens 270 der Systemsteuerung 110 durch die Freischalteinheit 11 spätestens nach Ablauf des vorbestimmten Zeitraums der Aktivierung, die Komponenten 140 zur Ladung des Fahrzeugs zu verriegeln, sofern diese aufgrund der vorherigen Datenkommunikation 22 mit der Zugriffseinheit 12 entriegelt wurden, und/oder das Verriegeln 280 der entsprechenden Komponenten 140 durch die Systemsteuerung 110 des Fahrzeugs 100 nach Abschluss der Ladung des Fahrzeugs 100 nach entsprechender Datenkommunikation 22 zwischen Zugriffseinheit 12 und Freischalteinheit 11 erfolgen. In einem weiteren Schritt können zusätzlich charakteristische Daten über die erfolgte Ladung des Fahrzeugs 100 durch die Freischalt-einheit 11 an die Aktivierungseinheit 14 und/oder an die Zugriffseinheit 12 nach erfolgter Verriegelung der Komponenten 140 des Fahrzeugs 100 übertragen 290 werden. In einer Ausführungsform, wo das Fahrzeug 100 ein Elektrofahrzeug ist, ermöglicht das Übermitteln 230 zumindest eine Aufladung des Elektrofahrzeugs 100 oder eine Öffnung eines Kofferraums und/oder einer Ladefläche 120 mittels Freigabe der entsprechenden Komponenten 140 des Elektrofahrzeugs 100.

Die hier gezeigten Ausführungsformen stellen nur Beispiele für die vorliegende Erfindung dar und dürfen daher nicht einschränkend verstanden werden.

Die hier gezeigten Ausführungsformen stellen nur Beispiele für die vorliegende Erfindung dar und dürfen daher nicht einschränkend verstanden werden.

Insbesondere können die in der voranstehenden Beschreibung, insbesondere in Form der Beispiele B1 bis B17 bzw. der Veranschaulichungen V1 bis V21, in den Ansprüchen und in den Figuren offenbarten Merkmale sowohl einzeln auch in beliebiger Kombination wesentlich für die Erfindung in ihren verschiedenen Ausführungsformen sein.

### Bezugszeichenliste

- 1: Erfindungsgemäßes Zugangssystem
- 11: Freischalteinheit
- 111: Prozessoreinheit
- 112: Datenspeicher
- 12: Zugriffseinheit
- 13: Aktivierungseinheit
- 14: Steuersignale
- 21: Datenkommunikation zwischen Aktivierungseinheit und Freischalteinheit
- 22: Datenkommunikation zwischen Zugriffseinheit und Freischalteinheit
- 3: Nutzer
- 100: Erfindungsgemäßes Fahrzeug, beispielsweise ein Elektrofahrzeug
- 110: Systemsteuerung des Fahrzeugs
- 120: Kofferraum und/oder Ladefläche
- 130: Empfangsantenne
- 140: Komponenten des Fahrzeugs, beispielsweise Tankklappe oder Verschluss von Kofferraum oder Ladefläche
- 200: erfindungsgemäßes Verfahren
- 210: Aktivieren einer im Fahrzeug positionierten Freischalteinheit
- 220: Veranlassen eines Zugangs von außen zu dem Fahrzeug
- 230: Übermitteln von Steuersignalen an die Systemsteuerung
- 240: Ansteuerung des Verriegelungssystems und Freigabe zumindest einer verriegelnden Komponente des Fahrzeugs
- 250: Durchführen einer Autorisierungsprüfung der Aktivierungseinheit
- 260: Durchführen einer Autorisierungsprüfung der Zugriffseinheit
- 270: Anweisen der Systemsteuerung zur Verriegelung die Komponenten nach Ablauf des vorbestimmten Zeitraums
- 280: Verriegeln der Komponenten durch die Systemsteuerung nach Abschluss der Aufladung oder einer Beladung
- 290: Übertragen von charakteristischen Daten zur Ladung nach erfolgter Verriegelung der Komponenten des Fahrzeugs

## Patentansprüche

1. Ein digitales Zugangssystem (1) zumindest geeignet zum Einbau in einem Elektrofahrzeug (100) mit einem Verriegelungssystem und zur geeigneten Verbindung mit einer Systemsteuerung (110) des Fahrzeugs (100), wobei das Zugangssystem (1) mindestens eine Freischalteinheit (11) zur Positionierung in dem Fahrzeug (100), mindestens eine Zugriffseinheit (12) und mindestens eine Aktivierungseinheit (13) zur Verwendung außerhalb des Fahrzeugs (100) umfasst, wobei die Aktivierungseinheit (13) dazu ausgestaltet ist, mittels drahtloser Datenkommunikation (21) zu der Freischalteinheit (11) die Freischalteinheit (11) zumindest für einen Zeitraum zu aktivieren, die Zugriffseinheit (12) dazu ausgestaltet ist, mittels einer zur vorherigen Datenkommunikation (21) separaten unabhängigen drahtlosen Datenkommunikation (22) mit der durch die Aktivierungseinheit (13) vorher aktivierten Freischalteinheit (11) einen Zugang zum Fahrzeug (100) von außen zu veranlassen, wobei die Freischalteinheit (11) dazu ausgestaltet ist, in Reaktion auf die Datenkommunikation (22) mit der Zugriffseinheit (12) den Zugang veranlassende Steuersignale (14) an die Systemsteuerung (110) zur Ansteuerung des Verriegelungssystems und Freigabe zumindest einer verriegelnden Komponente (140) zur Ermöglichung des Zugangs zum Fahrzeug zu dessen Ladung zu übermitteln;
**dadurch gekennzeichnet, dass**
das Zugangssystem (1) ein Hintergrund-Computersystem umfasst, das so ausgestaltet ist, dass es zumindest eine Registrierung von Nutzern (3) und eine Eintragung von Daten der Fahrzeuge (100) und/oder der Freischalteinheiten (11) und/oder der Zugriffseinheiten (12) und/oder der Aktivierungseinheiten (13) sowie deren Zuordnung zu den Fahrzeugen (100) und/oder Nutzern (3) ermöglicht und eine geeignete Übertragung von Daten an die Freischalteinheit (11) zur Ermöglichung einer Autorisierungsprüfung durch die Freischalteinheit (11) durchführt und dass die von der Freischalteinheit (11) an die Systemsteuerung (110) übermittelten Steuersignale (14) dazu vorgesehen sind, zumindest eine Aufladung des Elektrofahrzeugs (100) oder eine Öffnung eines Kofferraums und/oder einer Ladefläche (120) mittels Freigabe der entsprechenden Komponenten (140) des Elektrofahrzeugs (100) zu ermöglichen, wobei
eine Beauftragung zu einer Ladung und die Freigabe von Autorisierungsdaten für die Freischalteinheit (11) sowie anderer kommunizierter Daten über ein Blockchain-Programm-System im Rahmen des Hintergrund-Computersystems erfolgen.

2. Das Zugangssystem (1) nach Anspruch 1,
**dadurch gekennzeichnet, dass**
(i) die Freischalteinheit (11) zumindest zum Empfang von Signalen und/oder Daten mittels Funk, WLAN oder Nahfeldkommunikation, vorzugsweise RFID, ausgestaltet ist und/oder
(ii) die Freischalteinheit (11) eine Prozessoreinheit (111) mit Datenspeicher (112) umfasst, auf dem Daten zur Autorisierung der Aktivierungseinheit (13) und/oder der Zugriffseinheit (12) gespeichert sind und die Prozessoreinheit (111) dazu ausgestaltet ist, anhand dieser Daten eine Autorisierungsprüfung durchzuführen, wobei vorzugsweise die Freischalteinheit (11) dazu ausgestaltet ist, die Aktivierung erst nach einer erfolgreichen Autorisierungsprüfung der Aktivierungseinheit (13) durchzuführen.

3. Das Zugangssystem (1) nach Anspruch 1 oder 2,
**dadurch gekennzeichnet,**
**dass** die Freischalteinheit (11) dazu ausgestaltet ist, im aktivierten Zustand Signale zur Abfrage nach vorhandenen Zugriffseinheiten (12) auszusenden.

4. Das Zugangssystem (1) nach einem der voranstehenden Ansprüche,
**dadurch gekennzeichnet,**
**dass** die Zugriffseinheit (12) zumindest zum Aussenden von Signalen und/oder Daten mittels Funk, WLAN oder Nahfeldkommunikation, vorzugsweise RFID, ausgestaltet ist.

5. Das Zugangssystem (1) nach einem der voranstehenden Ansprüche,
**dadurch gekennzeichnet,**
**dass** die Zugriffseinheit (12) dazu ausgestaltet ist, zumindest einen Identifikationscode an die Freischalteinheit (11) zu übermitteln, anhand dessen die Freischalteinheit (11) eine Autorisierungsprüfung der Zugriffseinheit (12) durchführen kann, wobei die Übermittlung der Steuersignale (14) an die Systemsteuerung (110) erst nach erfolgreicher Autorisierungsprüfung der Zugriffseinheit (12) erfolgt, wobei insbesondere die Zugriffseinheit (12) ein Transponder ist, der dazu ausgestaltet ist, nach Empfang der Datenkommunikation (22) von der Freischalteinheit (11) zumindest den Identifizierungscode an die Freischalteinheit (11) zu übertragen, wobei vorzugsweise der Transponder (12) ein passiver Transponder ist.

6. Das Zugangssystem (1) nach einem der voranstehenden Ansprüche,
**dadurch gekennzeichnet,**
**dass**
(i) die Freischalteinheit (11) dazu ausgestaltet ist, spätestens nach Ablauf des vorbestimmten Zeitraums der Aktivierung die Systemsteuerung (110) anzuweisen, die aufgrund der vorherigen Datenkommunikation (22) mit der Zugriffseinheit (12) entriegelten Komponenten (140) wieder zu verriegeln und/oder
(ii) die Zugriffseinheit (12) dazu ausgestaltet ist, nach Abschluss der Ladung des Fahrzeugs (100) eine Verriegelung der entsprechenden Komponenten (140) mittels entsprechender Datenkommunikation (22) mit der Freischalteinheit (11) durch die Systemsteuerung (110) des Fahrzeugs (100) zu veranlassen,
wobei vorzugsweise die Freischalteinheit (11) dazu ausgestaltet ist, nach erfolgter Verriegelung der Komponenten (140) des Fahrzeugs (100) der Aktivierungseinheit (13) und/oder der Zugriffseinheit (12) charakteristische Daten über die erfolgte Ladung des Fahrzeugs (100) zu übertragen.

7. Das Zugangssystem (1) nach einem der voranstehenden Ansprüche,
**dadurch gekennzeichnet,**
**dass**
(a) die Freischalteinheit (11) für eine reversible Anordnung im Fahrzeug (100) und zur Verbindung mit der Systemsteuerung (110) ausgestaltet ist;
(b) die Datenkommunikation (21, 22) verschlüsselt erfolgt.

8. Ein Fahrzeug (100) mit einem Verriegelungssystem und einer Steuerungseinheit (110) zumindest zur Steuerung des Verriegelungssystems sowie einem digitalen Zugangssystem (1) nach Anspruch 1 umfassend mindestens eine Zugriffseinheit (12) und mindestens eine Aktivierungseinheit (13) zur Verwendung außerhalb des Fahrzeugs und eine Freischalteinheit (11), die in dem Fahrzeug (100) positioniert und mit der Steuerungseinheit (110) geeignet verbunden ist, um mittels Ansteuerung des Verriegelungssystems und Freigabe zumindest einer verriegelnden Komponente (140) den Zugang zum Fahrzeug zu dessen Ladung zu ermöglichen.

9. Das Fahrzeug (100) nach Anspruch 8,
**dadurch gekennzeichnet,**
**dass**
(i) die Freischalteinheit (11) mit einer Empfangsantenne (130) des Fahrzeugs (100) verbunden ist;
(ii) die Freischalteinheit (11) im Fahrzeug (100) an einer von außen und/oder vom Innenraum des Fahrzeugs (100) unzugänglichen Stelle angeordnet ist; und/oder
(iii) die Freischalteinheit (11) reversibel im Fahrzeug (100) installiert ist.

10. Das Fahrzeug (100) nach einem der Ansprüche 8 bis 9,
**dadurch gekennzeichnet,**
**dass** das Fahrzeug (100) ein Elektrofahrzeug ist und die von der Freischalteinheit (11) an die Systemsteuerung (110) übermittelten Steuersignale (14) dazu vorgesehen sind, zumindest eine Aufladung des Elektrofahrzeugs (100) oder eine Öffnung eines Kofferraums und/oder einer Ladefläche (120) mittels Freigabe entsprechender Komponenten (140) des Elektrofahrzeugs (100) zu ermöglichen, wobei vorzugsweise die Systemsteuerung (110) des Elektrofahrzeugs (100) aufgrund des Steuersignals (14) der Freischalteinheit (11) bei gewünschter Aufladung des Elektrofahrzeugs (100) zumindest eine Tankklappe als eine der Komponenten (140) entriegelt und/oder über Diagnoseanschlüsse des Elektrofahrzeugs (100) funktionsfähig freischaltet.

11. Ein Verfahren (200) zur Gewährung einer Zugangsberechtigung zu einem Elektrofahrzeug (100) mit einem Verriegelungssystem und einer Steuerungseinheit (110) zumindest zur Steuerung des Verriegelungssystems sowie einem in dem Fahrzeug (100) eingebauten digitalen Zugangssystem (1) nach Anspruch 1 umfassend mindestens eine Zugriffseinheit (12) und mindestens eine Aktivierungseinheit (13) zur Verwendung außerhalb des Fahrzeugs und eine im Fahrzeug (100) positionierte und mit der Steuerungseinheit (110) geeignet verbundene Freischalteinheit (11) und ein Hintergrund-Computersystem das so ausgestaltet ist, dass es zumindest eine Registrierung von Nutzern (3) und eine Eintragung von Daten der Fahrzeuge (100) und/oder der Freischalteinheiten (11) und/oder der Zugriffseinheiten (12) und/oder der Aktivierungseinheiten (13) sowie deren Zuordnung zu den Fahrzeugen (100) und/oder Nutzern (3) ermöglicht und eine geeignete Übertragung von Daten an die Freischalteinheit (11) zur Ermöglichung einer Autorisierungsprüfung durch die Freischalteinheit (11) durchführt, umfassend folgende Schritte:
- Aktivieren (210) der Freischalteinheit (11) zumindest für einen Zeitraum durch die sich außerhalb des Fahrzeugs (100) befindliche Aktivierungseinheit (13) mittels drahtloser Datenkommunikation (21) zu der Freischalteinheit (11);
- Veranlassen (220) eines Zugangs von außen zu dem Fahrzeug (100) durch die sich ebenfalls außerhalb des Fahrzeugs (100) befindliche Zugriffseinheit (12) mittels einer zur vorherigen Datenkommunikation (21) separaten unabhängigen drahtlosen Datenkommunikation (22) mit der durch die Aktivierungseinheit (13) vorher aktivierten Freischalteinheit (11);
- Übermitteln (230) von den Zugang veranlassenden Steuersignalen (14) an die Systemsteuerung (110) durch die Freischalteinheit (11) in Reaktion auf die Datenkommunikation (22) mit der Zugriffseinheit (12); und
- Ansteuerung (240) des Verriegelungssystems und Freigabe zumindest einer verriegelnden Komponente (140) zur Ermöglichung des Zugangs zum Fahrzeug zu dessen Ladung durch die Systemsteuerung (110);
wobei das Übermitteln (230) von den Zugang veranlassenden Steuersignalen (14) an die Systemsteuerung (110) zumindest eine Aufladung des Elektrofahrzeugs (100) oder eine Öffnung eines Kofferraums und/oder einer Ladefläche (120) mittels Freigabe der entsprechenden Komponenten (140) des Elektrofahrzeugs (100) ermöglicht; und
wobei die Beauftragung zu einer Ladung und die Freigabe von Autorisierungsdaten für die Freischalteinheit (11) sowie anderer kommunizierter Daten über ein Blockchain-Programm-System im Rahmen des Hintergrund-Computersystems erfolgen.

12. Das Verfahren (200) nach Anspruch 11, wobei die Freischalteinheit (11) eine Prozessoreinheit (111) mit Datenspeicher (112) umfasst, auf dem Daten zur Autorisierung der Aktivierungseinheit (13) und/oder der Zugriffseinheit (12) gespeichert sind, umfassend die weiteren Schritte:
- Durchführen (250) einer Autorisierungsprüfung der Aktivierungseinheit (13) anhand dieser Daten durch die Prozessoreinheit (111) und Aktivieren (210) der Freischalteinheit (11) erst nach Erfolg der Autorisierungsprüfung der Aktivierungseinheit (13), und/oder
- Durchführen (260) einer Autorisierungsprüfung der Zugriffseinheit anhand eines von der Zugriffseinheit an die Freischalteinheit (11) übermittelten Identifikationscodes durch die Prozessoreinheit (111) und Übermitteln (230) der Steuersignale erst nach Erfolg der Autorisierungsprüfung der Zugriffseinheit (12).

13. Das Verfahren (200) nach Anspruch 11 oder 12, umfassend den oder die weiteren Schritte:
- Anweisen (270) der Systemsteuerung (110) durch die Freischalteinheit (11) spätestens nach Ablauf des vorbestimmten Zeitraums der Aktivierung, die Komponenten (140) zur Ladung des Fahrzeugs zu verriegeln, sofern diese aufgrund der vorherigen Datenkommunikation (22) mit der Zugriffseinheit (12) entriegelt wurden; und/oder
- Verriegeln (280) der entsprechenden Komponenten (140) durch die Systemsteuerung (110) des Fahrzeugs (100) nach Abschluss der Ladung des Fahrzeugs (100) nach entsprechender Datenkommunikation (22) zwischen Zugriffseinheit (12) und Freischalteinheit (11).

14. Das Verfahren (200) nach einem der Ansprüche 11 bis 13, umfassend den weiteren Schritt:
- Übertragen (290) von charakteristischen Daten über die erfolgte Ladung des Fahrzeugs (100) durch die Freischalteinheit (11) an die Aktivierungseinheit (14) und/oder an die Zugriffseinheit (12) nach erfolgter Verriegelung der Komponenten (140) des Fahrzeugs (100).

## Claims

1. A digital access system (1) at least suitable for installation in an electric vehicle (100) with a locking system, and for suitable connection to a system controller (110) of the vehicle (100), wherein the access system (1) comprises at least one authorizing unit (11) for positioning in the vehicle (100), at least one access unit (12), and at least one activation unit (13) for use outside the vehicle (100), wherein the activation unit (13) is configured to activate the authorizing unit (11) at least for a period of time by way of wireless data communication (21) to the authorizing unit (11), the access unit (12) is configured to bring about access to the vehicle (100) from the outside by way of independent wireless data communication (22), which is separate from the previous data communication (21), with the authorizing unit (11) previously activated by the activation unit (13), wherein, in response to the data communication (22) with the access unit (12), the authorizing unit (11) is configured to transmit to the system controller (110) control signals (14) that bring about access to actuate the locking system and release at least one locking component (140) to enable access to the vehicle for the loading thereof;
**characterized in that**
the access system (1) comprises a background computer system that is configured such that it enables at least a registration of users (3) and entry of data of the vehicles (100) and/or authorizing units (11) and/or access units (12) and/or activation units (13) as well as the assignment thereof to the vehicles (100) and/or users (3), and carries out a suitable transfer of data to the authorizing unit (11) to enable an authorization check by the authorizing unit (11);
and **in that** the control signals (14) transmitted by the authorizing unit (11) to the system controller (110) are provided to enable at least charging of the electric vehicle (100) or opening of a luggage compartment and/or cargo area (120) by way of release of the corresponding components (140) of the electric vehicle (100), wherein
an order for loading and the release of authorization data for the authorizing unit (11) together with other communicated data is carried out via a blockchain program system within the background computer system.

2. The access system (1) according to Claim 1,
**characterized in that**
(i) the authorizing unit (11) is configured at least for receiving signals and/or data by way of radio, WLAN, or near-field communication, preferably RFID, and/or
(ii) the authorizing unit (11) comprises a processor unit (111) with data memory (112) on which data for authorizing the activation unit (13) and/or the access unit (12) are stored, and the processor unit (111) is configured to carry out an authorization check on the basis of these data, wherein the authorizing unit (11) is preferably configured to carry out activation only after a successful authorization check of the activation unit (13).

3. The access system (1) according to Claim 1 or 2,
**characterized in that,**
in the activated state, the authorizing unit (11) is configured to emit signals to poll available access units (12).

4. The access system (1) according to any one of the preceding claims,
**characterized in that**
the access unit (12) is configured at least for emitting signals and/or data by way of radio, WLAN, or near-field communication, preferably RFID.

5. The access system (1) according to any one of the preceding claims,
**characterized in that**
the access unit (12) is configured to transmit at least one identification code to the authorizing unit (11), on the basis of which the authorizing unit (11) can perform an authorization check of the access unit (12), wherein the control signals (14) are transmitted to the system controller (110) only after a successful authorization check of the access unit (12), wherein in particular the access unit (12) is a transponder that is configured, after receiving the data communication (22) from the authorizing unit (11), to transmit at least the identification code to the authorizing unit (11), wherein the transponder (12) is preferably a passive transponder.

6. The access system (1) according to any one of the preceding claims,
**characterized in that,**
(i) at the latest after expiry of the predetermined activation period, the authorizing unit (11) is configured to instruct the system controller (110) to relock the components (140) unlocked on the basis of the previous data communication (22) with the access unit (12) and/or,
(ii) once loading of the vehicle (100) is complete, the access unit (12) is configured to bring about locking of the corresponding components (140) by the system controller (110) of the vehicle (100) by way of corresponding data communication (22) with the authorizing unit (11),
wherein, once the components (140) of the vehicle (100) have been locked, the authorizing unit (11) is preferably configured to transmit characteristic data about the completed loading of the (100) to the activation unit (13) and/or the access unit (12).

7. The access system (1) according to any one of the preceding claims,
**characterized in that**
(a) the authorizing unit (11) is configured for reversible arrangement in the vehicle (100) and for connection to the system controller (110);
(b) data communication (21, 22) is encrypted.

8. A vehicle (100) with a locking system and a control unit (110) at least for controlling the locking system as well as a digital access system (1) according to Claim 1 comprising at least one access unit (12) and at least one activation unit (13) for use outside the vehicle and an authorizing unit (11) that is positioned in the vehicle (100) and is suitably connected to the control unit (110) in order to enable access to the vehicle for the loading thereof by way of actuating the locking system and releasing at least one locking component (140).

9. The vehicle (100) according to Claim 8,
**characterized in that**
(i) the authorizing unit (11) is connected to a receiving antenna (130) of the vehicle (100);
(ii) the authorizing unit (11) is arranged in the vehicle (100) at a location inaccessible from the outside and/or from the interior of the vehicle (100); and/or
(iii) the authorizing unit (11) is reversibly installed in the vehicle (100).

10. The vehicle (100) according to any one of claims 8 to 9,
**characterized in that**
the vehicle (100) is an electric vehicle and the control signals (14) transmitted by the authorizing unit (11) to the system controller (110) are provided to enable at least charging of the electric vehicle (100) or opening of a luggage compartment and/or cargo area (120) by way of release of the corresponding components (140) of the electric vehicle (100), wherein, when charging of the electric vehicle (100) is desired, the system controller (110) of the electric vehicle (100), on the basis of the control signal (14) of the authorizing unit (11), preferably unlocks at least a fuel flap as one of the components (140) and/or authorizes it to function via diagnostic connections of the electric vehicle (100).

11. A method (200) for granting access authorization to an electric vehicle (100) with a locking system and a control unit (110) at least for controlling the locking system as well as a digital access system (1) according to Claim 1 installed in the vehicle (100) comprising at least one access unit (12) and at least one activation unit (13) for use outside the vehicle and an authorizing unit (11) positioned in the vehicle (100) and suitably connected to the control unit (110) and a background computer system that is configured such that it enables at least registration of users (3) and entry of data of the vehicles (100) and/or authorizing units (11) and/or access units (12) and/or activation units (13) as well as the assignment thereof to the vehicles (100) and/or users (3) and carries out a suitable transfer of data to the authorizing unit (11) to enable an authorization check by the authorizing unit (11) comprising the following steps of:
- activation (210) of the authorizing unit (11) at least for a period of time by the activation unit (13) located outside the vehicle (100) by way of wireless data communication (21) to the authorizing unit (11);
- bringing about (220) of access to the vehicle (100) from the outside by the access unit (12) likewise located outside the vehicle (100) by way of independent wireless data communication (22), which is separate from the previous data communication (21), with the authorizing unit (11) previously activated by the activation unit (13);
- transmission (230) by the authorizing unit (11) to the system controller (110) of control signals (14) that bring about access in response to the data communication (22) with the access unit (12); and
- actuation (240) by the system controller (110) of the locking system and release of at least one locking component (140) to enable access to the vehicle for the loading thereof;
wherein transmission (230) to the system controller (110) of control signals (14) that bring about access enables at least charging of the electric vehicle (100) or opening of a luggage compartment and/or a cargo area (120) by way of release of the corresponding components (140) of the electric vehicle (100);
and wherein the order for loading and the release of authorization data for the authorizing unit (11) together with other communicated data is carried out via a blockchain program system within the background computer system.

12. The method (200) according to Claim 11, wherein the authorizing unit (11) comprises a processor unit (111) with data memory (112) on which data are stored for authorizing the activation unit (13) and/or the access unit (12), comprising the further steps of:
- performing (250) of an authorization check of the activation unit (13) on the basis of these data by the processor unit (111) and activation (210) of the authorizing unit (11) only after success of the authorization check of the activation unit (13), and/or
- performing (260) of an authorization check of the access unit on the basis of an identification code transmitted from the access unit to the authorizing unit (11) by the processor unit (111) and transmission (230) of the control signals only after success of the authorization check of the access unit (12).

13. The method (200) according to either of Claims 11 or 12 comprising the further step(s) of:
- instruction (270) of the system controller (110) by the authorizing unit (11) to lock the components (140) for loading the vehicle at the latest after expiry of the predetermined activation period if said components (140) were unlocked on the basis of the previous data communication (22) with the access unit (12); and/or
- locking (280) of the corresponding components (140) by the system controller (110) of the vehicle (100) once charging/loading of the vehicle (100) is complete after corresponding data communication (22) between the access unit (12) and authorizing unit (11).

14. The method (200) according to any one of Claims 11 to 13 comprising the further step of:
- transmission (290) by the authorizing unit (11) of characteristic data about the completed loading of the vehicle (100) to the activation unit (14) and/or to the access unit (12) once the components (140) of the vehicle (100) have been locked.

## Revendications

1. Système d'accès digital (1) au moins approprié pour être installé dans un véhicule électrique (100) avec un système de verrouillage et pour être relié de manière appropriée à une commande de système (110) du véhicule (100), le système d'accès (1) comprenant au moins une unité de déverrouillage (11) destinée à être positionnée dans le véhicule (100), au moins une unité d'accès (12) et au moins une unité d'activation (13) destinée à être utilisée à l'extérieur du véhicule (100), dans lequel l'unité d'activation (13) est conçue pour activer l'unité de déverrouillage (11) au moins pendant un laps de temps à l'aide d'une communication de données sans fil (21) à destination de l'unité de déverrouillage (11), l'unité d'accès (12) est conçue pour initier un accès au véhicule (100) depuis l'extérieur à l'aide d'une communication de données sans fil (22) indépendante, qui est distincte de la communication de données précédente (21), avec l'unité de déverrouillage (11) activée précédemment par l'unité d'activation (13), dans lequel l'unité de déverrouillage (11) est conçue, en réaction à la communication de données (22) avec l'unité d'accès (12), pour transmettre à la commande de système (110) des signaux de commande initiant l'accès (14) pour commander le système de verrouillage et libérer au moins un composant verrouillé (140) pour permettre l'accès au véhicule pour son chargement ;
**caractérisé en ce que**
le système d'accès (1) comprend un système informatique en arrière-plan qui est conçu de manière à permettre au moins un enregistrement d'utilisateurs (3) et une entrée de données des véhicules (100) et/ou des unités de déverrouillage (11) et/ou des unités d'accès (12) et/ou des unités d'activation (13) ainsi que leur affectation aux véhicules (100) et/ou aux utilisateurs (3) et réalise une transmission appropriée de données vers l'unité de déverrouillage (11) pour permettre un contrôle d'autorisation par l'unité de déverrouillage (11) ;
et **en ce que** les signaux de commande (14) transmis à la commande de système (110) par l'unité de déverrouillage (11) sont prévus pour permettre au moins une recharge du véhicule électrique (100) ou une ouverture d'un coffre et/ou d'une surface de chargement (120) à l'aide d'une libération des composants correspondants (140) du véhicule électrique (100), dans lequel
l'instruction de réaliser un chargement et la libération de données d'autorisation pour l'unité de déverrouillage (11) ainsi que d'autres données communiquées s'effectuent par le biais d'un système de programme de chaînes de blocs dans le cadre du système informatique en arrière-plan.

2. Système d'accès (1) selon la revendication 1,
**caractérisé en ce que**
(i) l'unité de déverrouillage (11) est conçue au moins pour recevoir des signaux et/ou des données par la radio, le réseau local sans fil WLAN ou la communication en champ proche, de préférence RFID, et/ou
(ii) l'unité de déverrouillage (11) comprend une unité de processeur (111) avec une mémoire de données (112) sur laquelle sont enregistrées des données pour autoriser l'unité d'activation (13) et/ou l'unité d'accès (12) et l'unité de processeur (111) est conçue pour réaliser un contrôle d'autorisation à l'aide de ces données, dans lequel de préférence l'unité de déverrouillage (11) est conçue pour réaliser l'activation uniquement après un contrôle d'autorisation réussi de l'unité d'activation (13).

3. Système d'accès (1) selon la revendication 1 ou 2,
**caractérisé en ce que**
l'unité de déverrouillage (11) est conçue pour, dans l'état activé, envoyer des signaux pour interroger les unités d'accès présentes (12).

4. Système d'accès (1) selon l'une quelconque des revendications précédentes,
**caractérisé en ce que**
l'unité d'accès (12) est conçue au moins pour envoyer des signaux et/ou des données par la radio, le réseau local sans fil WLAN ou la communication en champ proche, de préférence RFID.

5. Système d'accès (1) selon l'une quelconque des revendications précédentes,
**caractérisé en ce que**
l'unité d'accès (12) est conçue pour transmettre à l'unité de déverrouillage (11) au moins un code d'identification, à l'aide duquel l'unité de déverrouillage (11) peut réaliser un contrôle d'autorisation de l'unité d'accès (12), dans lequel la transmission des signaux de commande (14) à la commande de système (110) ne s'effectue qu'après un contrôle d'autorisation réussi de l'unité d'accès (12), dans lequel en particulier l'unité d'accès (12) est un transpondeur qui est conçu pour transmettre au moins le code d'identification à l'unité de déverrouillage (11) après réception de la communication de données (22) par l'unité de déverrouillage (11), dans lequel de préférence le transpondeur (12) est un transpondeur passif.

6. Système d'accès (1) selon l'une quelconque des revendications précédentes,
**caractérisé en ce que**
(i) l'unité de déverrouillage (11) est conçue pour, au plus tard après l'expiration du laps de temps prédéterminé de l'activation, assigner la commande de système (110) à reverrouiller les composants (140) déverrouillés suite à la précédente communication de données (22) avec l'unité d'accès (12) et/ou
(ii) l'unité d'accès (12) est conçue pour, après l'achèvement du chargement du véhicule (100), initier par la commande de système (110) du véhicule (100) un verrouillage des composants correspondants (140) à l'aide de la communication de données correspondante (22) avec l'unité de déverrouillage (11),
dans lequel de préférence l'unité de déverrouillage (11) est conçue pour, après le verrouillage réussi des composants (140) du véhicule (100), transmettre à l'unité d'activation (13) et/ou l'unité d'accès (12) des données caractéristiques sur le chargement réussi du véhicule (100).

7. Système d'accès (1) selon l'une quelconque des revendications précédentes,
**caractérisé en ce que**
(a) l'unité de déverrouillage (11) est conçue pour être disposée de manière réversible dans le véhicule (100) et pour être reliée à la commande de système (110) ;
(b) la communication de données (21, 22) s'effectue de manière chiffrée.

8. Véhicule (100) avec un système de verrouillage et une unité de commande (110) au moins pour commander le système de verrouillage ainsi qu'un système d'accès digital (1) selon la revendication 1 comprenant au moins une unité d'accès (12) et au moins une unité d'activation (13) destinée à une utilisation à l'extérieur du véhicule et une unité de déverrouillage (11) qui est positionnée dans le véhicule (100) et est reliée de manière appropriée à l'unité de commande (110) pour permettre l'accès au véhicule et à son chargement à l'aide d'une commande du système de verrouillage et de la libération d'au moins un composant verrouillé (140).

9. Véhicule (100) selon la revendication 8,
**caractérisé en ce que**
(i) l'unité de déverrouillage (11) est reliée à une antenne de réception (130) du véhicule (100) ;
(ii) l'unité de déverrouillage (11) dans le véhicule (100) est disposée à un emplacement inaccessible de l'extérieur et/ou de l'espace intérieur du véhicule (100) ; et/ou
(iii) l'unité de déverrouillage (11) est installée de manière réversible dans le véhicule (100).

10. Véhicule (100) selon l'une des revendications 8 à 9,
**caractérisé en ce que**
le véhicule (100) est un véhicule électrique et les signaux de commande (14) transmis à la commande de système (110) par l'unité de déverrouillage (11) sont prévus pour permettre au moins une recharge du véhicule électrique (100) ou une ouverture d'un coffre et/ou d'une surface de chargement (120) à l'aide d'une libération de composants correspondants (140) du véhicule électrique (100), dans lequel de préférence la commande de système (110) du véhicule électrique (100) déverrouille au moins un clapet à carburant au titre d'un des composants (140) suite au signal de commande (14) de l'unité de déverrouillage (11) lors de la recharge souhaitée du véhicule électrique (100) et/ou le déverrouille de manière opérationnelle par le biais de connexions de diagnostic du véhicule électrique (100).

11. Procédé (200) destiné à accorder une autorisation d'accès à un véhicule électrique (100) avec un système de verrouillage et une unité de commande (110) au moins pour commander le système de verrouillage ainsi qu'un système d'accès digital (1) installé dans le véhicule (100) selon la revendication 1 comprenant au moins une unité d'accès (12) et au moins une unité d'activation (13) destinée à une utilisation à l'extérieur du véhicule et une unité de déverrouillage (11) positionnée dans le véhicule (100) et reliée de manière appropriée à l'unité de commande (110) et un système informatique en arrière-plan qui est conçu de manière à permettre au moins un enregistrement d'utilisateurs (3) et une entrée de données des véhicules (100) et/ou des unités de déverrouillage (11) et/ou des unités d'accès (12) et/ou des unités d'activation (13) ainsi que leur affectation aux véhicules (100) et/ou aux utilisateurs (3) et réalise une transmission appropriée de données vers l'unité de déverrouillage (11) pour permettre un contrôle d'autorisation par l'unité de déverrouillage (11), comprenant les étapes suivantes :
- activer (210) l'unité de déverrouillage (11) au moins pendant un laps de temps par l'unité d'activation (13) se trouvant à l'extérieur du véhicule (100) à l'aide d'une communication de données sans fil (21) à destination de l'unité de déverrouillage (11) ;
- initier (220) un accès au véhicule (100) depuis l'extérieur par l'unité d'accès (12) se trouvant également à l'extérieur du véhicule (100) à l'aide d'une communication de données sans fil indépendante (22) distincte de la communication de données précédente (21) avec l'unité de déverrouillage (11) activée précédemment par l'unité d'activation (13) ;
- transmettre (230) à la commande de système (110) par l'unité de déverrouillage (11) des signaux de commande (14) initiant l'accès en réaction à la communication de données (22) avec l'unité d'accès (12) ; et
- commander (240) le système de verrouillage et libérer au moins un composant verrouillé (140) pour permettre l'accès au véhicule pour son chargement par la commande de système (110) ;
dans lequel la transmission (230) à la commande de système (110) des signaux de commande (14) initiant l'accès permet au moins une recharge du véhicule électrique (100) ou une ouverture d'un coffre et/ou d'une surface de chargement (120) à l'aide d'une libération des composants correspondants (140) du véhicule électrique (100) ; et dans lequel l'instruction de réaliser un chargement et la libération de données d'autorisation pour l'unité de déverrouillage (11) ainsi que d'autres données communiquées s'effectuent par le biais d'un système de programme de chaînes de blocs dans le cadre du système informatique en arrière-plan.

12. Procédé (200) selon la revendication 11, dans lequel l'unité de déverrouillage (11) comprend une unité de processeur (111) avec une mémoire de données (112), sur laquelle sont enregistrées des données pour autoriser l'unité d'activation (13) et/ou l'unité d'accès (12), comprenant les étapes suivantes :
- réaliser (250) un contrôle d'autorisation de l'unité d'activation (13) à l'aide de ces données par l'unité de processeur (111) et activer (210) l'unité de déverrouillage (11) uniquement après la réussite du contrôle d'autorisation de l'unité d'activation (13), et/ou
- réaliser (260) par l'unité de processeur (111) un contrôle d'autorisation de l'unité d'accès à l'aide d'un code d'identification transmis par l'unité d'accès à destination de l'unité de déverrouillage (11) et transmettre (230) les signaux de commande uniquement après réussite du contrôle d'autorisation de l'unité d'accès (12).

13. Procédé (200) selon la revendication 11 ou 12, comprenant la ou les autres étapes :
- assigner (270) la commande de système (110) par l'unité de déverrouillage (11), au plus tard après l'expiration du laps de temps prédéterminé de l'activation, à verrouiller les composants (140) pour le chargement du véhicule dans la mesure où ceux-ci ont été déverrouillés suite à la précédente communication de données (22) avec l'unité d'accès (12) ; et/ou
- verrouiller (280) les composants correspondants (140) par la commande de système (110) du véhicule (100) après l'achèvement du chargement du véhicule (100) après la communication de données correspondante (22) entre l'unité d'accès (12) et l'unité de déverrouillage (11).

14. Procédé (200) selon l'une des revendications 11 à 13, comprenant l'autre étape :
- transmettre (290) des données caractéristiques sur le chargement réussi du véhicule (100) par l'unité de déverrouillage (11) à destination de l'unité d'activation (14) et/ou à destination de l'unité d'accès (12) après un verrouillage réussi des composants (140) du véhicule (100).
